(19) Europäisches Patentamt
European Patent Office
Office européen des brevets

(11) Veröffentlichungsnummer : **0 009 466**
**B1**

(12) # EUROPÄISCHE PATENTSCHRIFT

(45) Veröffentlichungstag der Patentschrift : **19.05.82**

(21) Anmeldenummer : **79810095.4**

(22) Anmeldetag : **14.09.79**

(51) Int. Cl.³ : **C 09 B 56/02**, C 09 B 55/00, C 09 B 45/26, D 06 P 3/24, D 06 P 3/32, D 06 P 3/60, C 07 C107/00

(54) **1 : 2-Bis-chromkomplexfarbstoffe aus Polyazo- oder Disazo-azomethinverbindungen, deren Herstellung und Verwendung.**

(30) Priorität : **20.09.78 CH 9845/78**

(43) Veröffentlichungstag der Anmeldung : **02.04.80 (Patentblatt 80/07)**

(45) Bekanntmachung des Hinweises auf die Patenterteilung : **19.05.82 Patentblatt 82/20**

(84) Benannte Vertragsstaaten : **BE CH DE FR GB IT**

(56) Entgegenhaltungen :
**FR - A - 1 442 837**
**FR - A - 2 270 302**
**GB - A - 1 116 060**

(73) Patentinhaber : **CIBA-GEIGY AG**
**Patentabteilung Postfach**
**CH-4002 Basel (CH)**

(72) Erfinder : **Beffa, Fabio, Dr.**
**Burgstrasse 38**
**CH-4125 Riehen (CH)**

**EP 0 009 466 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

1 : 2-Bis-chromkomplexfarbstoffe aus Polyazo- oder Disazo-azomethinverbindungen, deren Herstellung und Verwendung

Die vorliegende Erfindung betrifft Chromkomplexfarbstoffe, die in Form der freien Säure der Formel

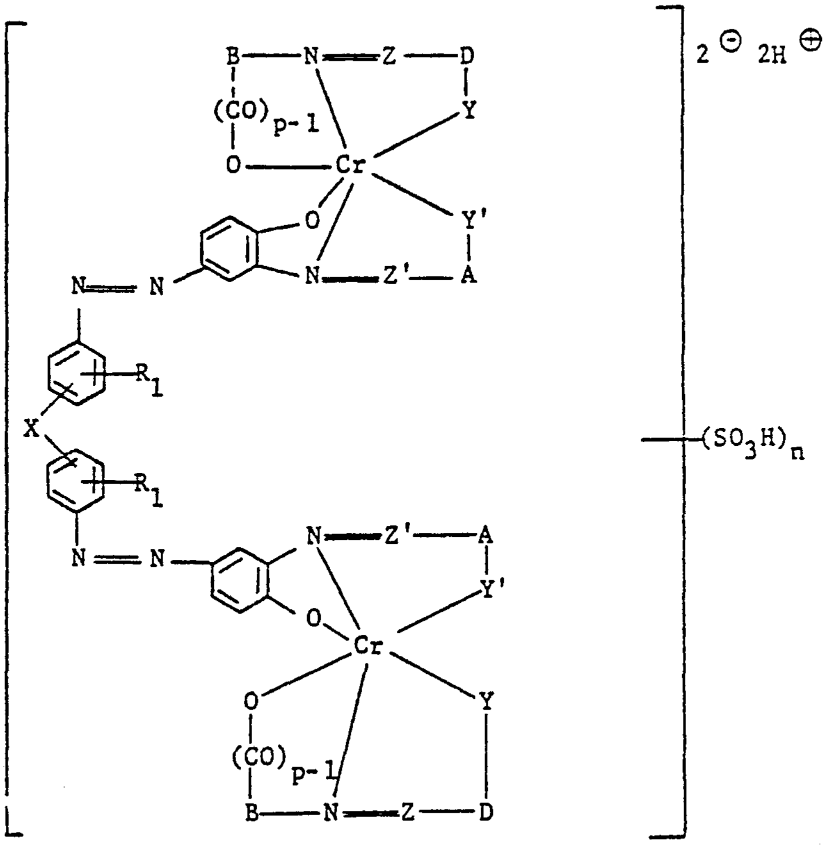

(I)

entsprechen, worin X eine direkte Bindung oder ein Brückenglied, Z und Z' unabhängig voneinander ein Stickstoffatom oder eine CH-Gruppe, p unabhängig voneinander 1 oder 2, Y und Y' unabhängig voneinander ein Sauerstoffatom oder eine Gruppe der Formel —NR—, worin R Wasserstoff oder niedrigmolekulares Alkyl bedeutet, wobei, wenn Z bzw. Z' eine CH-Gruppe ist, Y bzw. Y' ein Sauerstoffatom sein muss, $R_1$ unabhängig voneinander je Wasserstoff oder einen Substituenten, B unabhängig voneinander einen Benzol- oder Naphthalinrest, A unabhängig voneinander den Rest eines o-Hydroxyaldehyds, wenn Z' die CH-Gruppe bedeutet, oder, wenn Z' ein Stickstoffatom ist, den Rest einer in o-Stellung zu Y' kuppelnden Kupplungskomponente oder eines Acetessigsäureamids, D unabhängig voneinander den Rest eines o-Hydroxyaldehyds, wenn Z die —CH-Gruppe bedeutet, oder, wenn Z ein Stickstoffatom ist, den Rest einer in o-Stellung zu Y kuppelnden Kupplungskomponente oder eines Acetessigsäureamids und n eine ganze Zahl von 1 bis 10 bedeutet.

Es sind bereits zahlreiche 1 : 2-Chromkomplexfarbstoffe bekannt, z.B. aus den französischen Patentschriften 2.270.302 und 1.442.837 sowie aus der britischen Patentschrift 1.116.060. Dort sind jedoch keine Verbindungen beschrieben, welche zwei 1 : 2 Chromkomplexfarbstoffe über eine organische Brücke miteinander verbunden enthalten.

Als Brückenglied X kommen vor allem gegebenenfalls mit niedrigmolekularem Alkyl substituierte Methylenbrücken, wie $—CH_2—$, $—C(CH_3)_2—$,

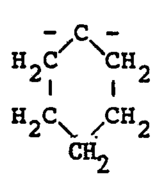 , 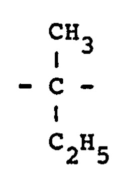 oder 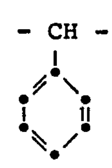

in Frage oder Brückenglieder, wie —O—, —S—, —NR'—, —SO—, $—SO_2—$, —CO—, —CO—CO—, $—SO_2—NH—$, $—SO_2—NR'—SO_2—$, —N=N—, $—CH_2—CH_2—$ oder —CH=CH—, worin R' Wasserstoff oder niedrigmolekulares Alkyl bedeutet.

Als Reste $R_1$ kommen ausser Wasserstoff vor allem die Sulfo- oder Carboxygruppe, Halogen, insbesondere Chlor, sowie niedrigmolekulares Alkyl un Alkoxy in Betracht.

Der Begriff « niedrigmolekular » bezeichnet hierin Reste mit bis zu 5 Kohlenstoffatomen.

Die Reste B können eine oder mehrere Sulfogruppen tragen und ausserdem weitersubstituiert sein, z.B. mit niedrigmolekularem Alkyl, Alkoxy, Alkylsulfonyl, Sulfonamido, niedrigmolekularem N-Alkyl- oder N,N-Dialkylsulfonamido, Chlor, Brom, Nitro, Cyano, Arylazo, insbesondere Phenylazo, Sulfophenylazo oder Sulfonaphthylazo und Arylazoarylenazo, insbesondere Sulfophenylazophenylenazo oder Sulfonaphthylazophenylenazo.

Vorzugsweise ist Z ein Stickstoffatom und der Rest D-Y leitet sich vor allem von folgenden Kupplungskomponenten ab : Phenole, Naphthole, Naphthylamine, Pyrazolone, Pyrazolimine, Pyridone sowie Acetessigsäureamide, insbesondere -anilide, sowie Barbitursäurederivate und Oxychinoline.

Bei den Resten A handelt es sich vorzugsweise um gegebenenfalls mit Arylazo oder Arylazoarylenazo substituierte o-Phenylenreste, wenn Z' die CH-Gruppe und Y' ein Sauerstoffatom ist. Als Arylazogruppen kommen hierbei insbesondere Phenyl- und Naphthylazo in Betracht, die gegebenenfalls mit Sulfo, Chlor, Brom, Nitro, Methoxy und/oder Methyl oder Aethyl substituiert sind und mit Arylen ist vir allem Phenylen gemeint.

Ist Z' ein Stickstoffatom, dann ist A-Y' vorzugsweise der Rest eines Phenols, Naphtols, Pyrazolons, Pyridons oder Acetoacetanilids. Beispiele derartiger Kupplungskomponenten werden weiter hinten angegeben.

Insbesondere betrifft die Anmeldung Verbindungen der Formel (1), worin Y und Y' je unabhängig voneinander ein Sauerstoffatom oder die NH-Gruppe sind und vor allem Chromkomplexfarbstoffe, die in Form der freien Säure der Formel

(2)

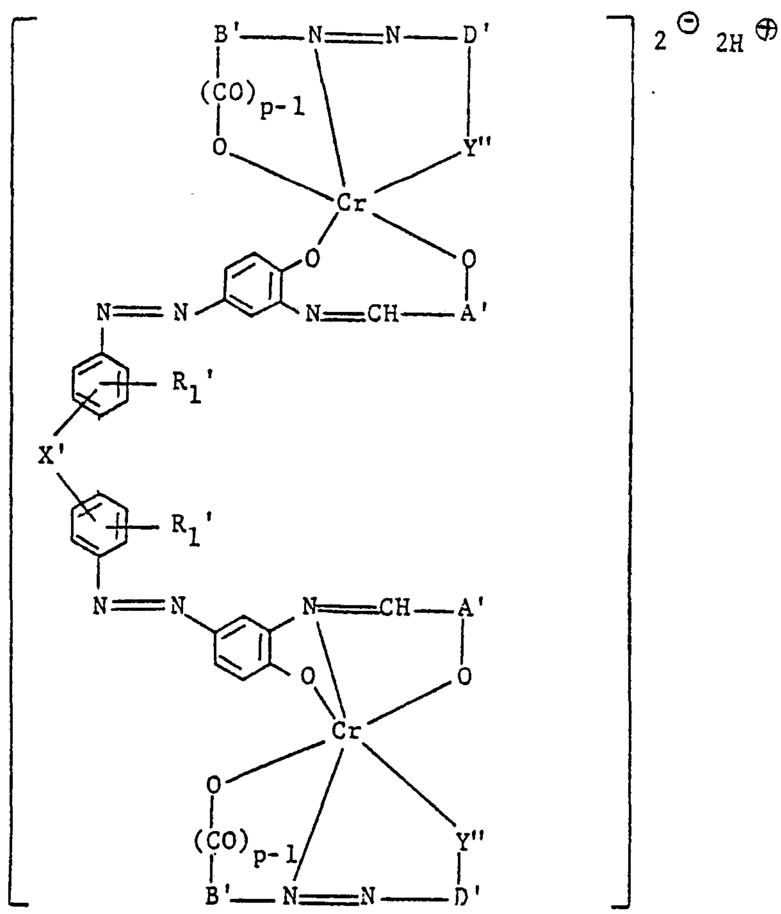

entsprechen, worin X' eine direkte Bindung oder eine Brücke der Formel

$-CH_2-$, 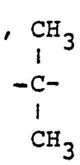 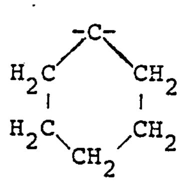, $-CH=CH-$, $-SO_2-$,

oder $-SO_2-NH-SO_2-$, $R_1'$ unabhängig voneinander Wasserstoff, die Sulfogruppe, Chlor, Methyl oder Methoxy, p unabhängig voneinander 1 oder 2, A' unabhängig voneinander ein gegebenenfalls mit Arylazo oder Arylazoarylenazo substituierter o-Phenylenrest, B' unabhängig voneinander je ein gegebenenfalls mit Sulfo-, Arylazo-, Arylazoarylenazo-, Alkyl- oder Alkoxygruppen, Chlor, Brom, Nitro oder Cyano substituierter Phenyl- oder Naphthylrest und D'-Y" unabhängig voneinander der Rest eines gegebenenfalls mit Hydroxy, Alkyl oder Alkoxy substituierten Phenols, der Rest eines gegebenenfalls mit Amino, Sulfo, Chlor oder Acylamino substituierten Naphthols oder eines gegebenenfalls mit Sulfo substituierten Naphthylamins, der Rest eines 1-Aryl-3-methylpyrazol-5-ons oder der Rest eines im Anilidkerngegebenenfalls mit Sulfo, Nitro, Chlor, Brom, Alkyl oder Alkoxy substituierten Acetessigsäureanilids ist.

Mit « Alkyl » und « Alkoxy » sind hierbei niedrigmolekulare Reste gemeint. Mit « Acylamino » werden niedrigmolekulare Alkanoylamino-, Alkylsulfonylamino- und Alkoxycarbonylaminoreste sowie Aroylamino- und Arylsulfonylaminoreste bezeichnet, und der Begriff « Aryl » umfasst vor allem Naphthyl, mit 1 bis 3 Sulfogruppen substituiertes Naphthyl sowie insbesondere Phenyl und mit Chlor, Brom, Methyl, Aethyl, Methoxy, Nitro oder Sulfo substituiertes Phenyl.

Eine weitere Gruppe von Farbstoffen entspricht der Formel

(3) 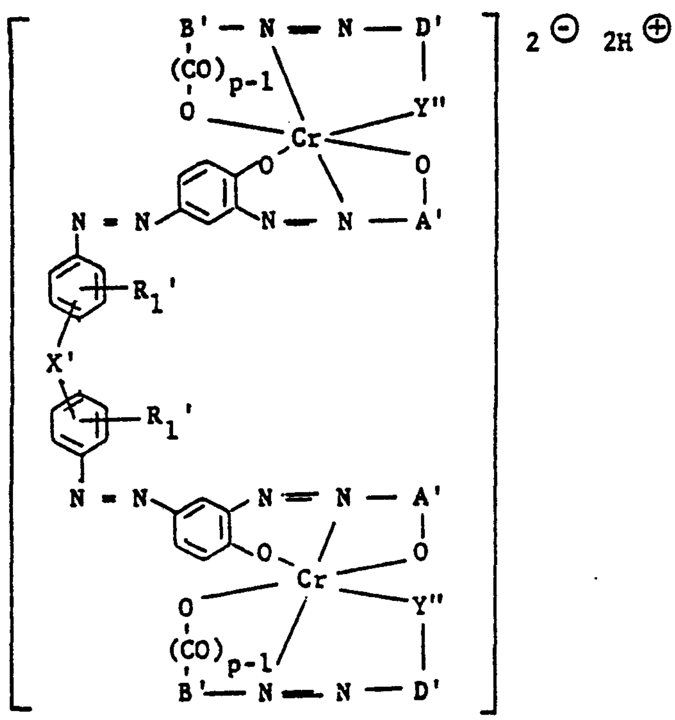

worin X' eine direkte Bindung oder eine Brücke der Formel

$-CH_2-$, 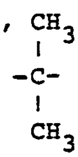 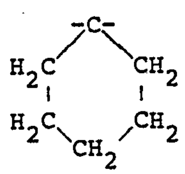 $-CH{=}CH-$, $-SO_2-$ oder $-SO_2-NH-SO_2-$

$R_1'$ unabhängig voneinander je Wasserstoff, die Sulfogruppe, Chlor, Methyl oder Methoxy, p unabhängig voneinander 1 oder 2, A'-O unabhängig voneinander der Rest eines gegebenenfalls mit Sulfo substituierten Naphthols, der Rest eines 1-Aryl-3-methyl-pyrazol-5-ons oder der Rest eines im Anilidkern gegebenenfalls mit Sulfo, Nitro, Chlor, Brom, Alkyl oder Alkoxy substituierten Acetoacetanilids, B' unabhängig voneinander ein gegebenfalls mit Sulfo-, Arylazo-, Arylazoarylenazo-, Alkyl- oder Alkoxygruppen, Chlor, Brom, Nitro oder Cyano substituierter Phenyl- oder Naphthylrest und D'-Y" unabhängig voneinander der Rest eines gegebenenfalls mit Hydroxy, Alkyl oder Alkoxy substituierten Phenols, der Rest eines gegebenenfalls mit Amino, Sulfo, Chlor oder Acylamino substituierten Naphthols oder eines gegebenenfalls mit Sulfo substituierten Naphthylamins, der Rest eines 1-Aryl-3-methylpyrazol-5-ons oder der Rest eines im Anilidkern gegebenenfalls mit Sulfo, Nitro, Chlor, Brom, Alkyl oder Alkoxy substituierten Acetessigsäureanilids ist.

Die neuen Farbstoffe der Formel (1) werden hergestellt, indem man einen Farbstoff der Formel

(4) 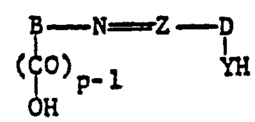

oder

(5)

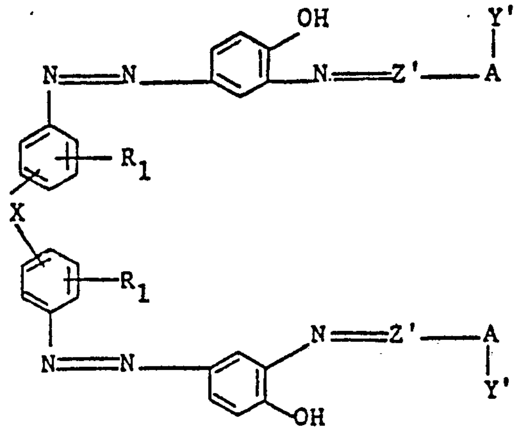

worin $R_1$, X, Y, Y', Z, Z', A, B, D und p dasselbe wie in Formel (1) bedeuten, mit einem chromabgebenden Mittel zum 1 : 1-Chromkomplex, bzw. im Falle der Formel (5) zum 2 Atome Chrom pro Molekül enthaltenden Chromkomplex umsetzt und diesen anschliessend mit dem nicht metallisierten Farbstoff der Formel (5) oder (4) umsetzt, wobei man die Ausgangsverbindungen so wählt, dass der Chromkomplex 2 bis 10 Sulfogruppen enthält und wobei zu beachten ist, dass das molare Verhältnis der Verbindung der Formel (4) zu derjenigen der Formel (5) 2 : 1 beträgt.

Vorzugsweise stellt man zuerst den 1 : 1-Chromkomplex der Verbindung der Formel (4) her und setzt 2 Aequivalente derselben mit einem Aequivalent der Verbindung der Formel (5) um.

Handelt es sich bei der Verbindung der Formel (5) um ein Bisazomethin, so wird letzteres zweckmässig im Reaktionsgemisch in situ hergestellt. Man verfährt hierzu so, dass man 2 Aequivalente des 1 : 1-Chromkomplexes des Farbstoffes der Formel (4) mit einem Gemisch aus einem Aequivalent eines Dihydroxydiamins der Formel

(6)

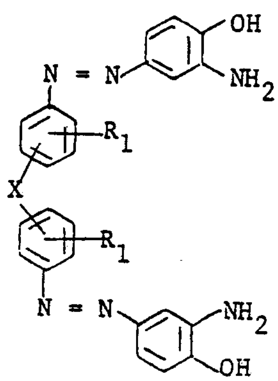

und 2 Aequivalenten eines Aldehyds der Formel

(7) HO—A—CHO

worin X und $R_1$ dasselbe wie in Formel (1) bedeuten und A ein gegebenenfalls mit Arylazo oder Arylazoarylenazo substituierter o-Phenylenrest ist, umsetzt.

Ist die Verbindung der Formel (5) eine Tetrazoverbindung, so entspricht diese der Formel

(8)

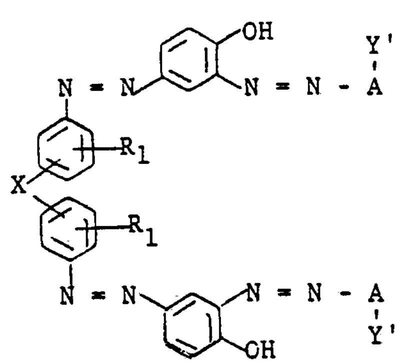

worin A-Y' den Rest eines Phenols, Naphthols, Pyrazolons, Pyridons oder Acetoacetanilids bedeutet und X und $R_1$ dasselbe wie bei Formel (1) bedeuten, und man setzt 1 Aequivalent derselben mit 2 Aequivalenten des 1 : 1-Chromkomplexes der Vebindung der Formel (4) um.

Eine bevorzugte Gruppe der anmeldungsgemässen Farbstoffe sind diejenigen, worin X eine direkte Bindung, eine $-SO_2-$, Vinylen- oder eine Cyclohexylenbrücke ist, da sich mit diesen Typen besonders interessante Verbindungen erzielen lassen.

Weiterhin werden Verbindungen der Formel (2) bevorzugt, worin die Reste $R_1'$ Wasserstoff oder Sulfo bedeuten, da diese besonders gut zugänglich sind.

Die Ausgangsfarbstoffe der Formel (4) werden in üblicher Weise hergestellt. Sofern Z ein Stickstoffatom ist, wird ein Amin der Formel

(9) $$HO-(CO)_{p-1}-B-NH_2$$

diazotiert und auf eine Kupplungskomponente der Formel

(10) $$H-D-YH$$

gekuppelt.

Geeignete Diazokomponenten der Formel (9) sind z.B. : Anthranilsäure, 4-Sulfo- und 4-Sulfonamidoanthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und -5-benzylsulfon, 2-Amino-1-hydroxybenzol-4-methyl-, äthyl-, chlormethyl- und -butylsulfon, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-hydroxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-6-sulfonsäureamid, 2-Amino-1-hydroxybenzol-4- oder -5- sulfanthranilid, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 6-Chlor-2-amino-1-hydroxybenzol-4-sulfosäure, 1-Amino-2-hydroxynaphthalin-4-sulfosäure, 1-Amino-2-hydroxy-6-nitronaphthalin-4-sulfosäure, 4-(4'- oder 3'-Sulfophenylazo)-2-amino-1-hydroxybenzol, 4-(3'-Sulfonamidophenylazo)-2-amino-1-hydroxybenzol, 4(4'-Phenylazophenylazo)-2-amino-1-hydroxybenzol, 2-Amino-1-hydroxybenzol-4,6-disulfosäure.

Von besonderem Interesse sind die Verbindungen, worin B bzw. B' ein nitro- und/oder sulfogruppenhaltiger Phenyl- oder Naphthylrest ist.

Der Rest D bzw. D' leitet sich besonders von folgenden Gruppen von Kupplungskomponenten ab : Naphthole, die gegebenenfalls mit Chlor, Acylamino-, Amino-, Sulfo-, Sulfonamido-, N-mono- oder N,N-disubstituierten Sulfonamidogruppen und Sulfongruppen substituiert sind, wobei diese Gruppen dieselben Bedeutungen haben, die vorne angegeben worden sind ;

Naphthylamine, die gegebenenfalls mit Sulfo-, Sulfonamido-, mono- oder disubstituierten Sulfonamido- oder Sulfongruppen substituiert sind ;

5-Pyrazolone oder 5-Aminopyrazole, die in 1-Stellung vorzugsweise einen gegebenenfalls mit Chlor, Nitro, niedrigmolekularen Alkyl- und Alkoxygruppen, Sulfonamido-, N-alkylierten Sulfonamidogruppen, Sulfon- oder insbesondere Sulfogruppen substituierten Phenyl- oder Naphthylrest besitzen ;

Acetessigsäureanilide, die im Anilidkern gegebenenfalls mit Chlor, Brom, niedrigmolekularen Alkyl-, Alkoxy-, Sulfon-, Sulfonamido-, N-mono- oder N,N-disubstituierten Sulfonamidogruppen und Sulfogruppen substituiert sein können ;

Phenole, die mit Hydroxy, niedrigmolekularen Acylaminogruppen und/oder mit vorzugsweise 1 bis 5 Kohlenstoffatome enthaltenden Alkylgruppen substituiert sind und in o-Stellung kuppeln ;

2,6-Dihydroxy-3-cyano- oder -carbonamido-4-alkylpyridin und 6-Hydroxy-2-pyridone, die in 1-Stellung durch niedrigmolekulares, gegebenenfalls substituiertes Alkyl, z.B. Methyl, Isopropyl, β-Hydroxyäthyl, β-Aminoäthyl oder γ-Isopropoxypropyl substituiert sind, in 3-Stellung eine Cyano- oder Carbonamidogruppe und in 4-Stellung eine niedrigmolekulare Alkylgruppe, insbesondere Methyl, tragen ;

Barbitursäure und an den Stickstoffatomen mit niedrigmolekularem Alkyl oder Aryl, insbesondere Phenyl, substituierte Barbitursäuren ;

Dioxychinoline.

Beispiele solcher Kupplungskomponenten sind : 2-Naphthol, 1,3- oder 1,5-Dihydroxynaphthalin, 2-Naphthol-6-sulfonamid, 2-Naphthol-6-β-hydroxyäthylsulfon, 1-Naphthol, 1-Acetylamino-7-naphthol, 1-Propionylamino-7-naphthol, 1-Carbomethoxyamino-7-naphthol, 1-Carboäthoxyamino-7-naphthol, 1-Carbopropoxyamino-7-naphthol, 1-Dimethylaminosulfonylamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 1-Naphthol-3-, -4- oder -5-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 1-Naphthylamin-4- oder -5-sulfosäure, 2-Aminonaphthalin-7-sulfosäure, 1-Naphthylamin-4-sulfonamid, 2-Aminophthalin-6-sulfonamid, 2-Aminonaphthalin-6-sulfonsäure-N-methylamid oder -6-sulfosäure, 1,3-Dimethylpyrazol-5-on, 1-Phenyl-3-methylpyrazol-5-on, 1-Phenyl-3-pyrazolon-3-carbonsäureamid, 1-(2'-, 3'- oder 4'-Methylphenyl)-3-methylpyrazol-5-on, 1-[3'- oder 4'-(β-Hydroxyäthylsulfonyl)-phenyl]-3-methylpyrazol-5-on, 1-(2'-, 3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2', 5'- oder 3',4'-Dichlorphenyl)-3-methylpyrazol-5-on, 1-(2'-, 3'- oder 4'-Sulfamoylphenyl)-3-methylpyrazol-5-on, 1-(2',5'-Dichlor-4'-sulfophenyl)-3-methylpyrazol-5-on, 1-(2'-, 3'- oder 4'-Methylsulfonylphenyl)-3-methylpyrazol-5-on, 1-(2'-, 3'- oder 4'-Sulfophenyl)-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoacet-o-chloranilid, Acetoacet-anilid-3- oder -4-sulfonamid, Acetoacet-m-xylidid, Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Aethoxycarbonylamino-4-methylphenol, 2,4-Dimethylphenol und 3,4-Dimethylphenol, Resorcin, 2,6-Dihydroxy-3-cyano-4-methylpyridin, 1-Methyl-3-cyano-4-äthyl-6-hydroxypyridon, 1-Amino-3-cyano-4-methyl-6-hydroxypyridon, 1-Phenyl-3-carbonamido-4-methyl-6-hydroxypyridon, Barbitursäure, 2,4-Dihydroxychinolin.

Vorzugsweise bedeuten die Reste D-Y bzw. D'-Y'' gegebenenfalls mit Sulfo oder Amino und Sulfo substituierte Naphtholreste, gegebenenfalls mit niedrigmolekularem Alkyl substituierte Phenolreste, den Acetoacetanilid- oder -chloranilidrest oder einen 1-Phenyl-3-methyl-pyrazol-5-on-rest, der im Phenylkern gegebenenfalls noch mit Sulfo oder Chlor oder Sulfo und Chlor substituiert ist.

Sofern Z eine —CH-Gruppe ist, wird ein Amin der Formel (9) mit einem o-Hydroxybenzaldehyd oder o-Hydroxynaphthaldehyd umgesetzt. Geeignete Aldehyde sind beispielsweise : 2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd.

Gewünschtenfalls können diese Aldehyde noch mit einer Arylazo- oder Arylazoarylenazogruppe substituiert sein. Die Begriffe « Arylazo » und « Arylazoarylenazo » haben hierbei dieselbe Bedeutung, wie bei den Erläuterungen zu Formel (1) angegeben wurde.

Die Dihydroxydiaminoverbindungen der Formel (6) werden erhalten, indem man ein Diamin der Formel

(11)

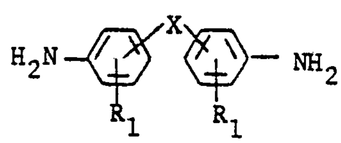

tetrazotiert und mit 2 Aequivalenten eines 2-Acylamino-1-hydroxybenzols alkalisch kuppelt und anschliessend die Acylaminogruppen verseift. Als Acylgruppe ist vorzugsweise die Acetylgruppe zu nennen.

Geeignete Diamine der Formel (11) sind z.B. 4,4'-Diaminodiphenyl, 2,2'-Diaminodiphenyl-4,4'-disulfosäure, 4,4'-Diaminodiphenyl-2- oder -3-sulfosäure, 4,4'-Diamino-diphenyl-2,2'- oder -3,3'-disulfosäure, 4,4'-Diamino-3,3'-dimethoxydiphenyl, 4,4'-Diamino-3,3'- oder -2,2'-dimethyldiphenyl, 3,3'- oder 4,4'-Diaminodiphenylsulfon, 4,4'-Diaminobenzophenon, 4,4'-Diaminodiphenyläther, 4,4'-Diaminodiphehylsulfid, 4,4'-Diamino-diphenylsulfoxyd, 4,4'-Diamino-diphenylamin, 4,4'-Diaminobenzil, 4,4'-Diaminobenzol-sulfanilid, 3,3'- oder 4,4'-Diaminodiphenyl-disulfimid, 4,4'-Dichlor-3,3'-diaminodiphenyldisulfimid, 4,4'-Diaminoazobenzol, 4,4'-Diaminostilben-2,2'-disulfosäure, 4,4'-Diamino-diphenylmethan, 4,4'-Diamino-3,3'-dimethyl-diphenylmethan, 3,3'-Diamino-4,4'-dimethyl-diphenylmethan, 4,4'-Diaminotriphenylmethan, 4,4'-Diaminodiphenyläthan, 4,4'-Diamino-3,3'-dimethyldiphenyläthan, 2,2-Bis-(4-aminophenyl) propan, 1,1-Bis-(4-aminophenyl)-cyclohexan und 1,1-Bis-(4-amino-3-methylphenyl)-cyclohexan.

Als Aldehyde der Formel (7) werden die weiter vorn genannten o-Hydroxybenzaldehyde und o-Hydroxynaphthaldehyde eingesetzt. Vorzugsweise verwendet man o-Hydroxybenzaldehyd, der gegebenenfalls mit Arylazo oder Arylazoarylenazo substituiert ist, wobei die Begriffe « Arylazo » und « Arylazoarylenazo » dieselbe Bedeutung haben, die bei den Erläuterungen zu Formel (1) gegeben wurde.

Die Tetrazoverbindungen der Formel (8) werden erhalten durch Diazotierung eines Dihydroxydiamins der Formel (6) und Kupplung auf 2 Aequivalente einer Kupplungskomponente der Formel

(12) H—A—Y'

Als Kupplungskomponenten der Formel (12) kommen vor allem Naphthole, Pyrazolone, Acetessiganilide und Pyridone in Betracht. Insbesondere sind es β-Naphthol, 1-Aryl-3-methylpyrazol-5-one oder im

Anilidkern gegebenenfalls mit Sulfo, Nitro, Chlor, Brom, niedrigmolekularem Alkyl oder Alkoxy substituierte Acetoacetanilide.

Vorzugsweise werden die Ausgangsprodukte so gewählt, dass der fertige Komplex 2 bis 8 und insbesondere 2 bis 6 Sulfogruppen enthält.

Die Herstellung des 1 : 1-Chromkomplexes der Verbindung der Formel (4) bzw. (5) erfolgt nach üblichen, an sich bekannten Methoden, z.B. indem man in saurem Medium mit einem Salz des dreiwertigen Chroms, wie Chromformiat, Chromsulfat, Chromchloridhexahydrat oder Chromfluorid, bei Siedetemperatur oder gegebenenfalls bei 100 °C übersteigenden Temperaturen umsetzt. Dreiwertiges Chrom kann auch im Reaktionsgemisch aus Chrom-VI-Verbindungen, z.B. Chromat, erzeugt werden, wenn man gleichzeitig ein Reduktionsmittel zugibt. Die Metallisierung kann in wässerigen, organischwässerigen oder in rein organischen Lösungsmitteln, wie Alkoholen oder Ketonen, durchgeführt werden.

Die Umsetzung des 1 : 1-Chromkomplexes des Farbstoffes der Formel (4) bzw. (5) mit dem metallfreien Farbstoff der Formel (6) bzw. (4), resp. die Eintopfreaktion zwischen einem 1 : 1-Chromkomplex eines Farbstoffes der Formel (4), einem Dihydroxydiamin der Formel (6) und einem Aldehyd der Formel (7) erfolgt zweckmässig in neutralem bis schwach alkalischem Medium, in offenem oder geschlossenem Gefäss, bei erhöhter Temperatur, z.B. bei Temperaturen zwischen 50 und 120 °C. Man kann in organischen Lösungsmitteln, z.B. Alkoholen oder Ketonen, arbeiten oder in wässeriger Lösung, wobei Zusätze von Lösungsmitteln, wie z.B. von Alkoholen, Formamid etc., gegebenenfalls die Umsetzung fördern können. Es empfiehlt sich im allgemeinen möglichst stöchiometrische Mengen des chromhaltigen 1 : 1-Komplexes und des metallfreien Farbstoffes miteinander umzusetzen, wobei das Molekularverhältnis zwischen metallfreiem Farbstoff und 1 : 1-Komplex zweckmässig mindestens 0,85 : 1 und höchstens 1 : 0,85 beträgt, ein Ueberschuss an metallhaltigem Farbstoff wirkt sich in der Regel weniger nachteilig aus als ein solcher an metallfreiem Farbstoff. Je näher dieses Verhältnis bei 1 : 1 liegt, umso vorteilhafter ist im allgemeinen das Ergebnis.

Statt eines einheitlichen 1 : 1-Chromkomplexes kann auch ein Gemisch verschiedener Chromkomplexe oder ein Gemisch verschiedener Dihydroxydiamine und Aldehyde bzw. Tetrazoverbindungen eingesetzt werden.

Die nach den obigen Verfahren erhältlichen neuen, chromhaltigen Mischkomplexe werden vorteilhaft in Form ihrer Salze, insbesondere Alkali-, wie Lithium-, Kalium-, vor allem aber Natriumsalze, oder auch Ammoniumsalze, isoliert. Sie eignen sich zum Färben der verschiedensten natürlichen oder synthetischen Polyamidmaterialien, wie Wolle, synthetische Polyamidfasern, insbesondere aber zum Färben von Leder. Je nach Konstitution eignen sie sich auch für das Färben von cellulosehaltigen Materialien, wie z.B. Baumwolle und Papier.

Die neuen Farbstoffe sind farbstark und decken gut. Sie haben ein gutes Ziehvermögen bei gleichzeitig guten Echtheiten, wie Wasch-, Wasser-, Schweiss-, Reib-, Diffusions- und Lichtechtheit. Besondere Erwähnung verdient das gute Aufbauvermögen auf diversen Ledersorten, sowohl auf reinchrom wie auch auf mit vegetabilen oder synthetischen Gerbstoffen nachgegerbtem Leder. Man erhält kräftige orange bis braune und olive Nuancen.

In den nachfolgenden Beispielen bedeuten die Teile, sofern nichts anderesangegeben wird, Gewichtsteile und die Prozente Gewichtsprozente. Die Temperaturen sind in Celsiusgraden angegeben.

Beispiel 1

(Siehe die Formel, Seite 9)

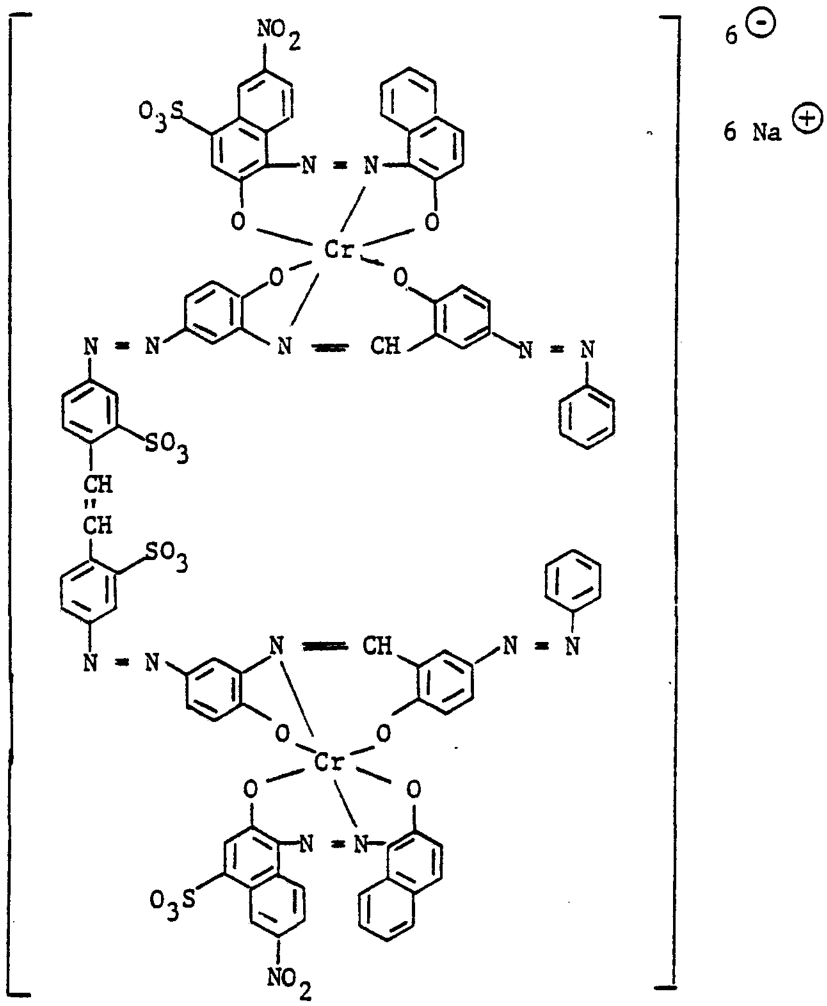

In 750 Volumenteilen Aethylenglykol suspendiert man 48,9 Teile der komplexen Chromverbindung vom Typus 1 Atom Chrom : 1 Molekül Farbstoff, welche 5,2 Teile Chrom und 43,9 Teile Monoazofarbstoff aus diazotierter 6-Nitro-1-amino-2-hydroxynaphthalin-4-sulfonsäure und 2-Hydroxynaphthalin entspricht, mit 22,6 Teilen Kupplungsprodukt aus diazotiertem Anilin und Salicylaldehyd und 30,5 Teilen der Dihydroxydiaminoverbindung, die erhalten wird durch alkalische Kupplung von tetrazotierter 4,4'-Diaminostilben-2,2'-disulfonsäure auf 2-Acetylamino-1-hydroxybenzol und anschliessende Verseifung der Acetylaminogruppen mit verdünnter Natronlauge.

Man erhitzt das Gemisch auf 80 bis 85 °C und erhöht gleichzeitig den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind.

Der neue chromhaltige Farbstoff wird durch Zugabe gesättigter Natriumchloridlösung ausgefällt, abfiltriert und getrocknet. Er stellt ein dunkles Pulver dar, das sich in Wasser mit brauner Farbe löst und Leder in braunen Tönen von guten Echtheiten färbt.

Beispiel 2

(Siehe die Formel, Seite 10)

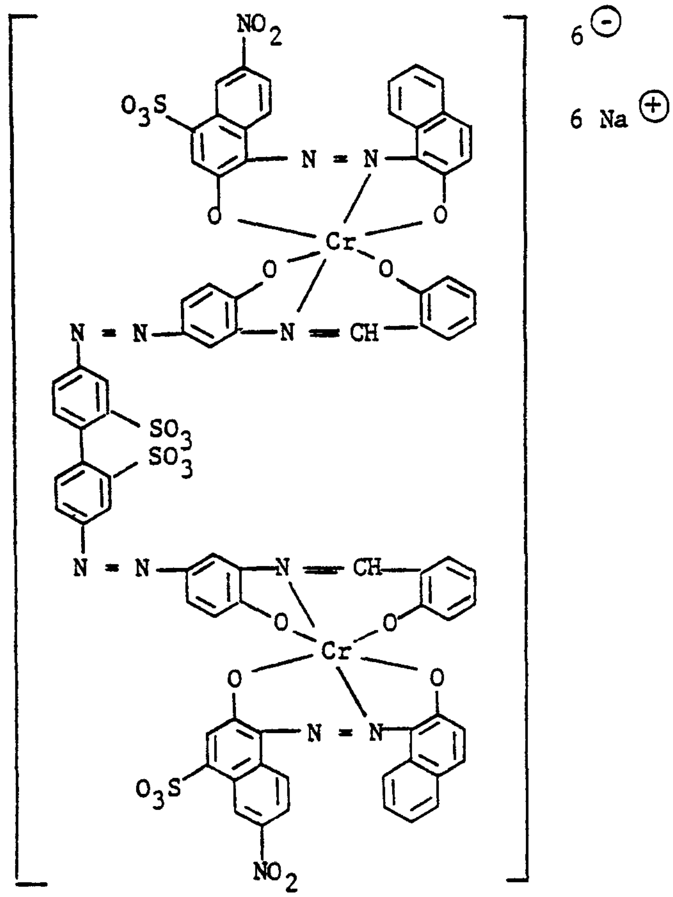

In 1 000 Volumenteilen Wasser suspendiert man 48,9 Teile der komplexen Chromverbindung vom Typus 1 Atom Chrom : 1 Molekül Farbstoff, welche 5,2 Teile Chrom und 43,9 Teile Monoazofarbstoff aus diazotierter 6-Nitro-1-amino-2-hydroxynaphthalin-4-sulfonsäure und 2-Hydroxynaphthalin, mit 12,5 Teilen Salicylaldehyd und 29,2 Teilen der Dihydroxydiaminoverbindung, die erhalten wird durch alkalische Kupplung von tetrazotierter 4,4'-Diaminodiphenyl-2,2'-disulfonsäure auf 2-Acetylamino-1-hydroxybenzol und anschliessende Verseifung der Acetylaminogruppe mit verdünnter Natronlauge. Man erhitzt das Gemisch auf 80 bis 85° und erhöht gleichzeitig den pH-Wert des Reaktionsgemisches auf 8 bis 8,5 durch Zugabe von 5n Natronlauge und hält es solange bei dieser Temperatur und konstantem pH-Wert durch weitere Zugabe von 5n Natronlauge, bis dis Ausgangsprodukte verschwunden sind. Der neue, chromhaltige Farbstoff wird durch Zugabe von Natriumchlorid ausgefällt; man filtriert ihn ab und trocknet ihn. Nach dem Trocknen stellt er ein dunkles Pulver dar, das sich in Wasser mit brauner Farbe löst und Leder in braunen Tönen färbt.

Beispiel 3

(Siehe die Formel, Seite 11)

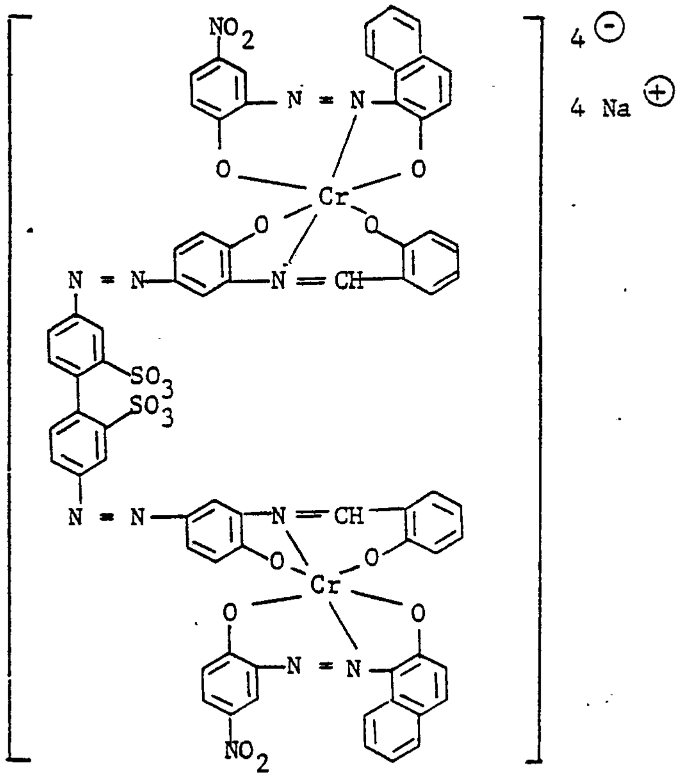

30,9 Teile des Monoazofarbstoffes aus diazotiertem 4-Nitro-2-amino-1-hydroxybenzol und 2-Hydroxynaphthalin werden mit 26,7 Teilen Chromchloridhexahydrat in 700 Volumenteilen Aethylenglykol solange bei 120 bis 125° gerührt, bis die Ausgangsverbindung verschwunden ist. Die erhaltene Lösung des Chromkomplexes vom Typus 1 Atom Chrom : 1 Molekül Farbstoff wird hierauf bei 80 bis 85° mit 12,5 Teilen Salicylaldehyd und 29.2 Teilen der Dihydroxydiaminoverbindung, die erhalten wird durch alkalische Kupplung von tetrazotierter 4,4'-Diaminodiphenyl-2,2'-disulfonsäure auf 2-Acetylamino-1-hydroxybenzol und anschliessende alkalische Verseifung der Acetylaminogruppen versetzt und solange bei dieser Temperatur gehalten, bis die Anlagerungsreaktion beendet ist. Gleichzeitig wird der pH-Wert des Reaktionsgemisches durch Zugabe von 5n Natronlauge auf 7,5 bis 8 gestellt und gehalten.

Nach beendigter Reaktion wird der chromhaltige Farbstoff durch Zugabe von gesättigter Natriumchloridlösung ausgefällt, abfiltriert und getrocknet.

Er stellt ein dunkles Pulver dar, das sich in Wasser mit brauner Farbe löst und Leder in braunen Tönen von guten Echtheiten färbt.

In analoger Weise erhält man weitere erfindungsgemässe Farbstoffe, wenn man den 1 : 1-Chromkomplex der in Kolonne III der folgenden Tabelle angegebenen Azo- oder Azomethinverbindung mit dem in Kolonne II angegebenen Aldehyd und der in Kolonne I angegebenen Dihydroxydiaminoverbindung umsetzt. Diese färben Leder in den in Kolonne IV angegebenen Nuancen.

(Siehe die Tabelle 1, Seiten 12 bis 36)

Tabelle 1

| No. | I | II | III | IV |
|---|---|---|---|---|
| 1 | 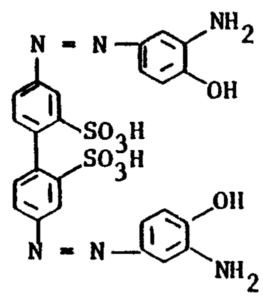 | 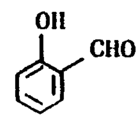 | 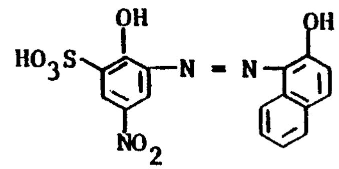 | braun |
| 2 | do | do | 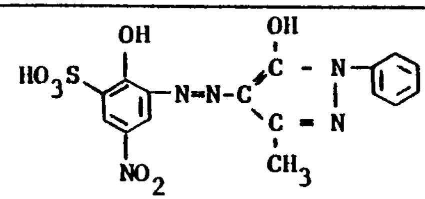 | orange |
| 3 | do | do | 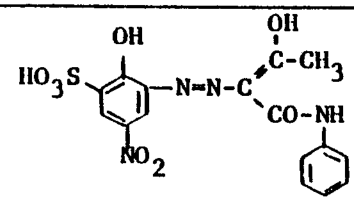 | gelb-stichig orange |

| No. | I | II | III | IV |
|---|---|---|---|---|
| 4 | 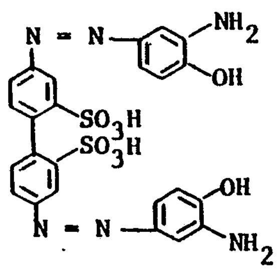 | 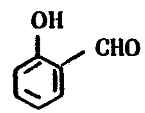 | 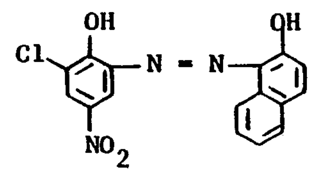 | braun |
| 5 | do | do | 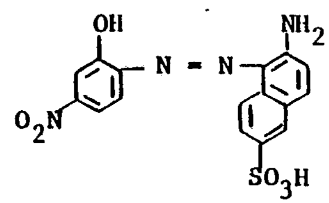 | olive-braun |
| 6 | do | do | 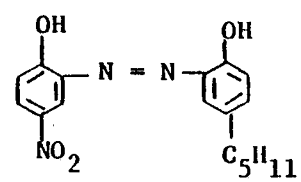 | braun |
| 7 | do | 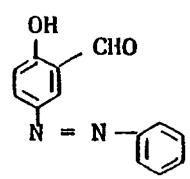 | 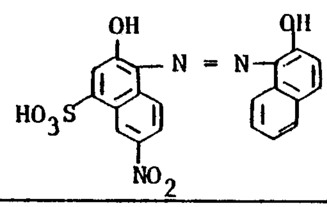 | braun |

| No. | I | II | III | IV |
|---|---|---|---|---|
| 8 | 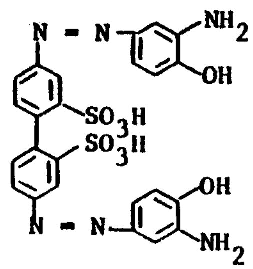 | 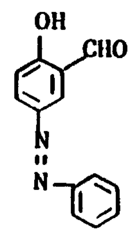 | 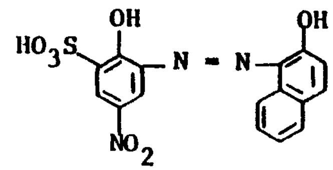 | braun |
| 9 | do | do | 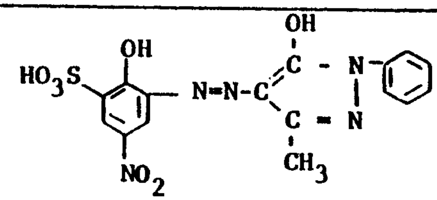 | orange |
| 10 | do | do | 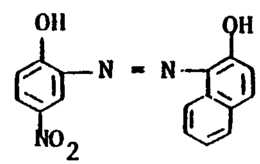 | braun |
| 11 | do | do | 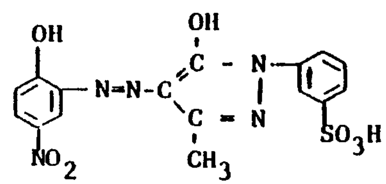 | orange |

| No. | I | II | III | IV |
|---|---|---|---|---|
| 12 | 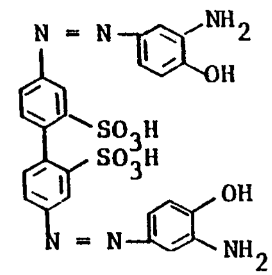 | 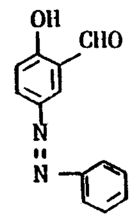 | 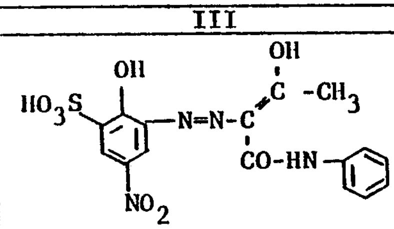 | gelb-orange |
| 13 | do | do | 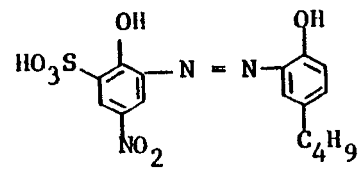 | braun |
| 14 | do | do | 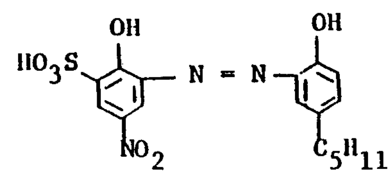 | braun |
| 15 | do | 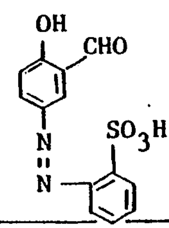 | 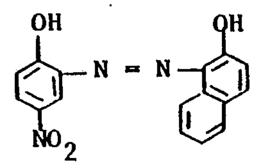 | braun |

| No. | I | II | III | IV |
|---|---|---|---|---|
| 16 | 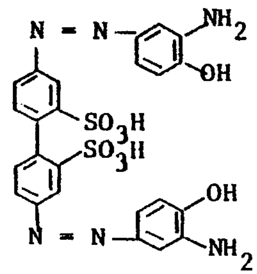 | 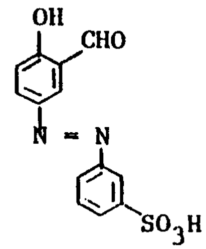 | 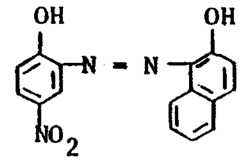 | braun |
| 17 | do | 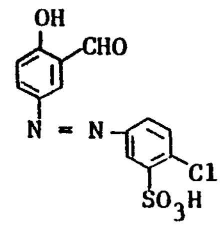 | do | braun |
| 18 | do | 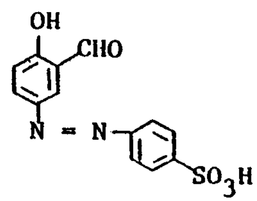 | do | braun |

| No. | I | II | III | IV |
|---|---|---|---|---|
| 19 | 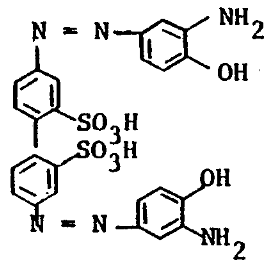 | 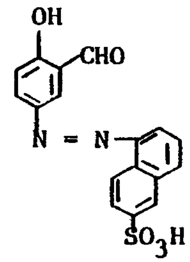 | 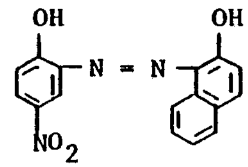 | braun |
| 20 | do | 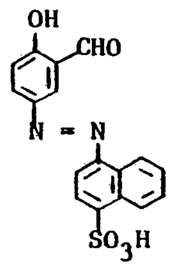 | do | braun |
| 21 | do | 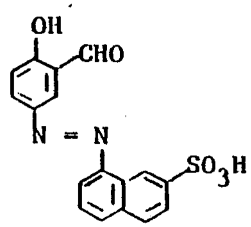 | do | braun |

| No. | I | II | III | IV |
|---|---|---|---|---|
| 22 | 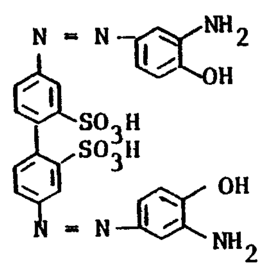 | 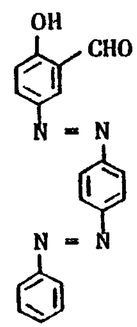 | 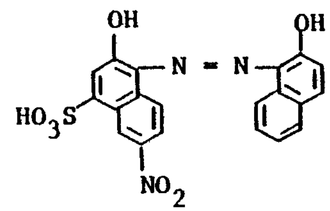 | braun |
| 23 | do | do | 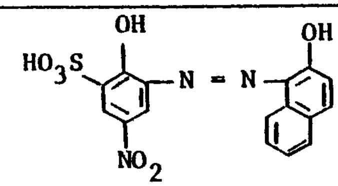 | braun |
| 24 | do | do | 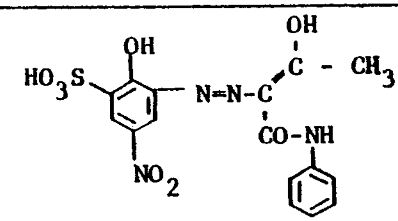 | gelb-stichig orange |

| No. | I | II | III | IV |
|---|---|---|---|---|
| 25 | 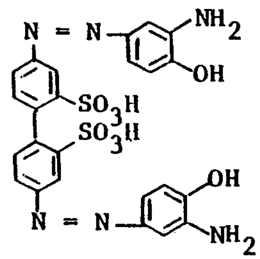 | 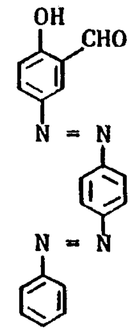 | 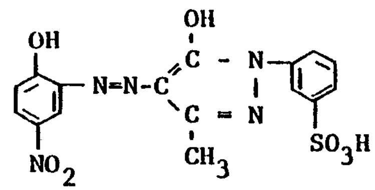 | orange |
| 26 | do | do | 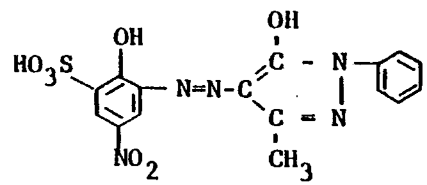 | orange |
| 27 | do | do | 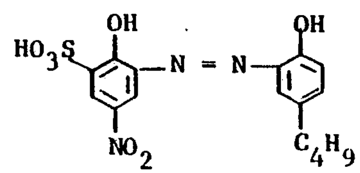 | braun |

| No. | I | II | III | IV |
|---|---|---|---|---|
| 28 | 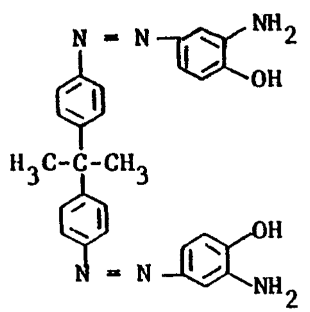 | 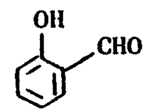 | 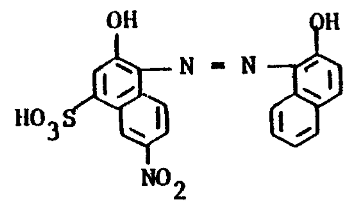 | braun |
| 29 | do | do | 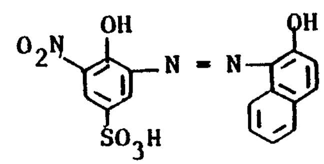 | braun |
| 30 | 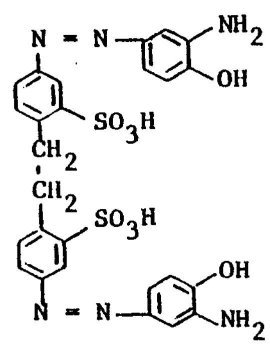 | do | 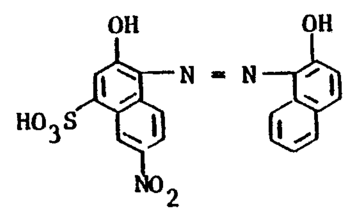 | braun |

| No. | I | II | III | IV |
|---|---|---|---|---|
| 31 | 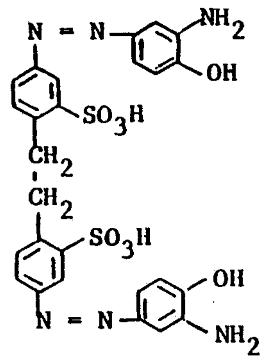 | 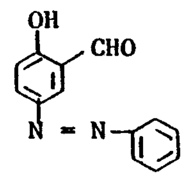 | 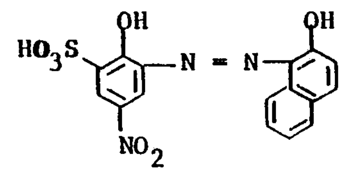 | braun |
| 32 | do | do | 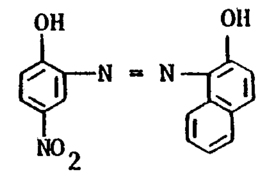 | braun |
| 33 | 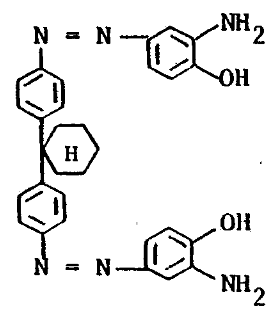 | 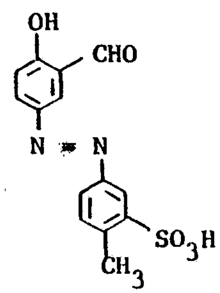 | 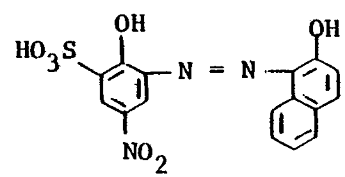 | braun |

| No. | I | II | III | IV |
|---|---|---|---|---|
| 34 | 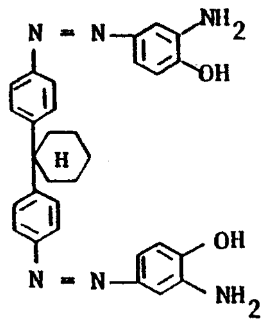 | 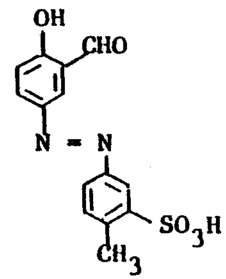 | 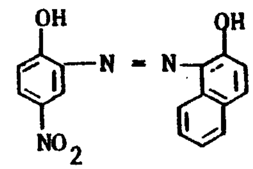 | braun |
| 35 | 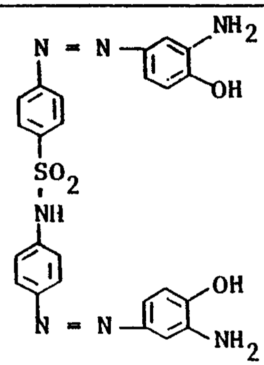 | 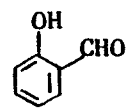 | 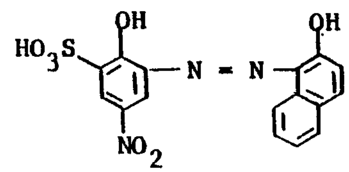 | braun |
| 36 | do | 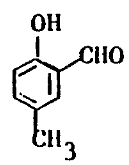 | do | braun |

| No. | I | II | III | IV |
|---|---|---|---|---|
| 37 | 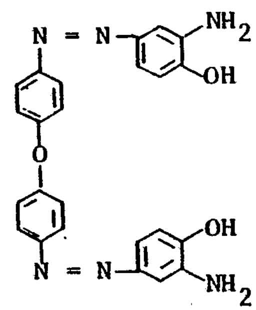 | 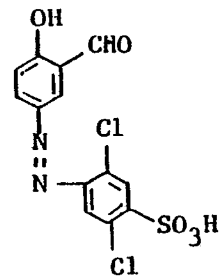 | 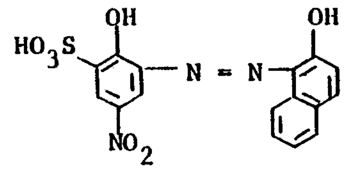 | braun |
| 38 | do | 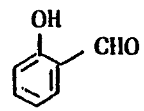 | do | braun |
| 39 | 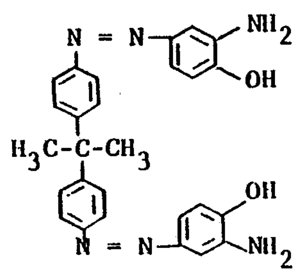 | do | do | braun |
| 40 | do | 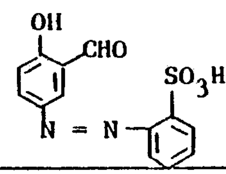 | do | braun |

| No. | I | II | III | IV |
|---|---|---|---|---|
| 41 | 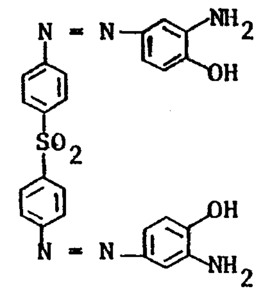 | 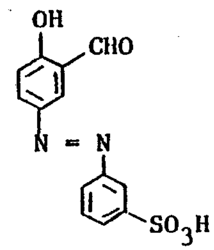 | 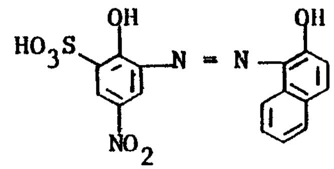 | braun |
| 42 | do | do | 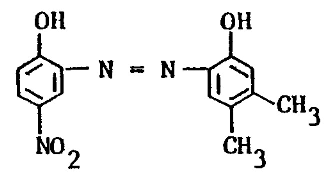 | braun |
| 43 | 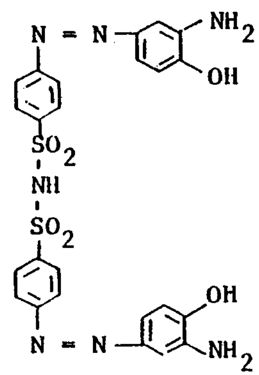 | do | 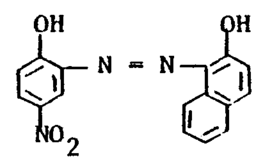 | braun |

| No. | I | II | III | IV |
|---|---|---|---|---|
| 44 | 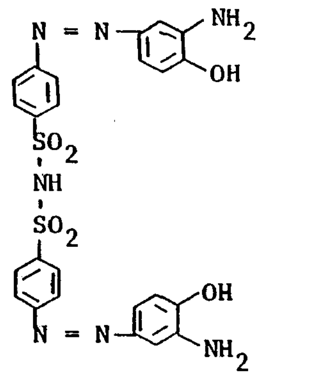 | 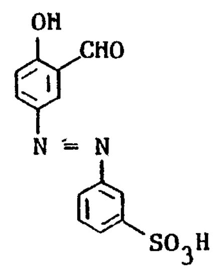 | 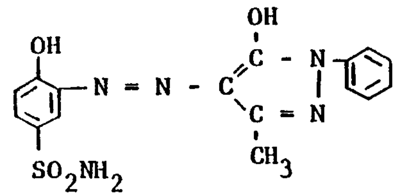 | orange |
| 45 | 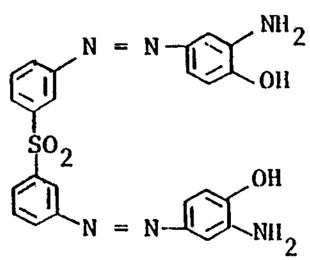 | do | do | orange |
| 46 | do | do | 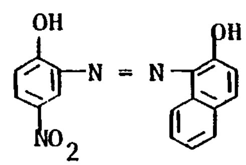 | braun |

| No. | I | II | III | IV |
|---|---|---|---|---|
| 47 | 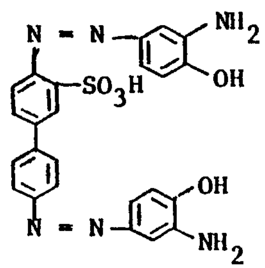 | 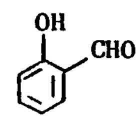 | 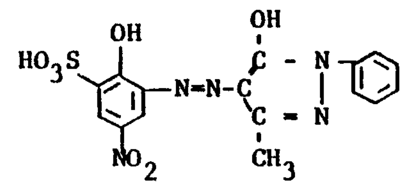 | orange |
| 48 | do | do | 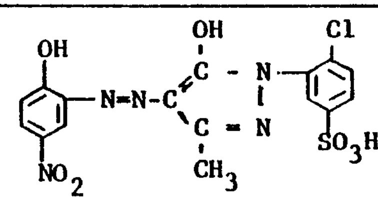 | orange |
| 49 | 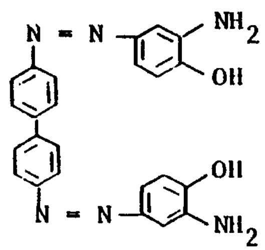 | do | do | orange |
| 50 | do | do | 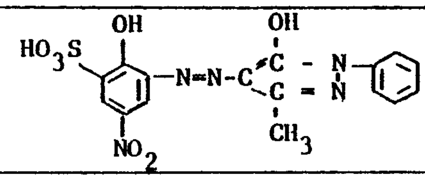 | orange |

| No. | I | II | III | IV |
|---|---|---|---|---|
| 51 | 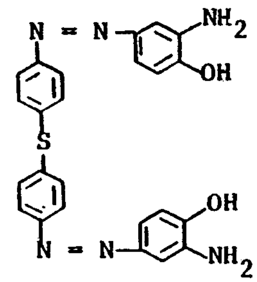 | 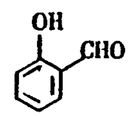 | 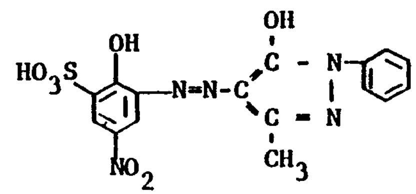 | orange |
| 52 | do | do | 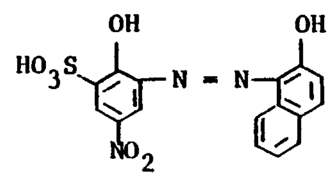 | braun |
| 53 | 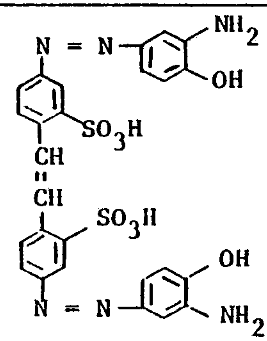 | do | 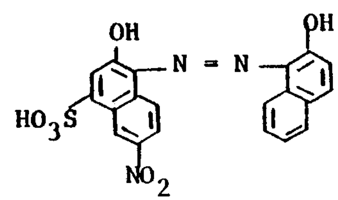 | braun |

| No. | I | II | III | IV |
|---|---|---|---|---|
| 54 | 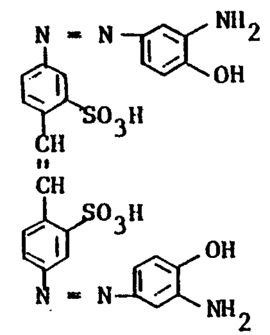 | 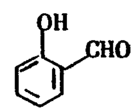 | 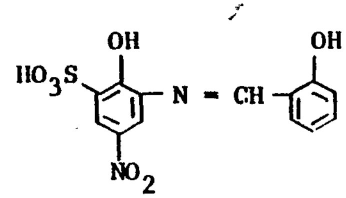 | orange |
| 55 | do | 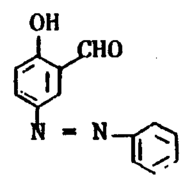 | do | orange |
| 56 | do | 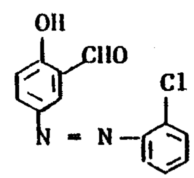 | do | orange |

| No. | I | II | III | IV |
|---|---|---|---|---|
| 57 | 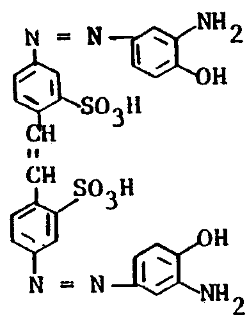 | 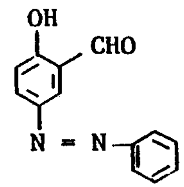 | 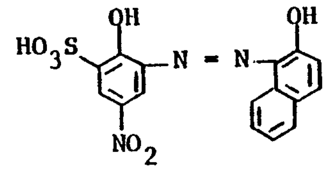 | braun |
| 58 | do | 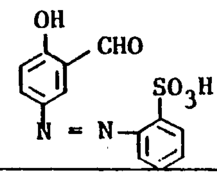 | 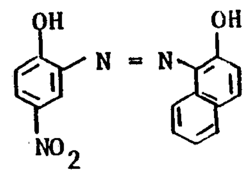 | rot- stichig braun |
| 59 | do | 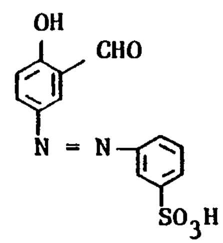 | do | braun |
| 60 | do | do | 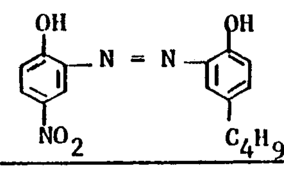 | braun |

| No. | I | II | III | IV |
|---|---|---|---|---|
| 61 | 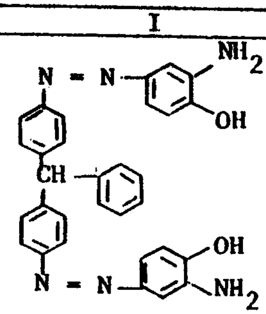 | 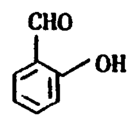 | 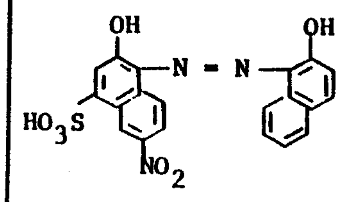 | braun |
| 62 | 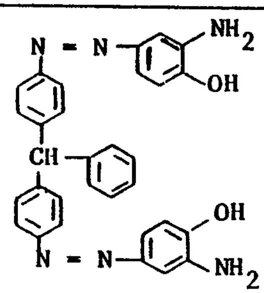 | 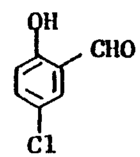 | 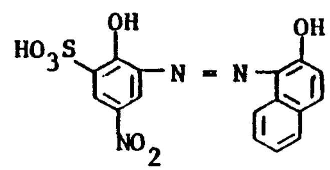 | braun |
| 63 | 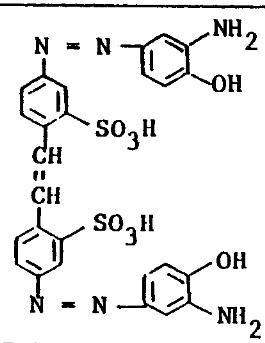 | 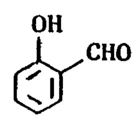 | do | braun |

| No. | I | II | III | IV |
|---|---|---|---|---|
| 64 | 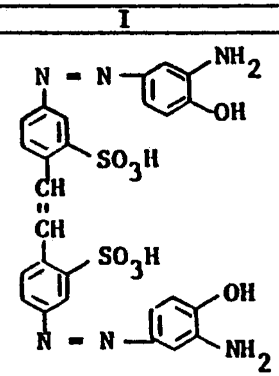 | 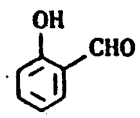 | 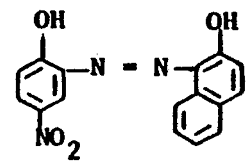 | braun |
| 65 | 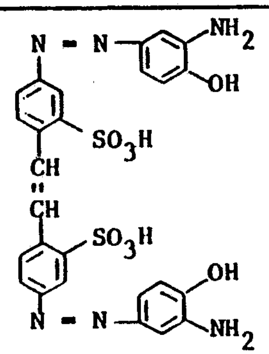 | 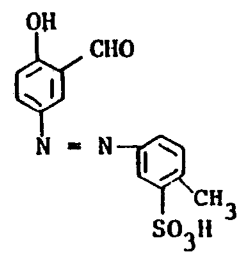 | 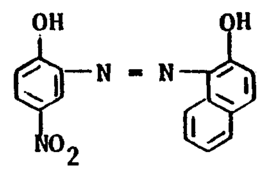 | braun |
| 66 | do | 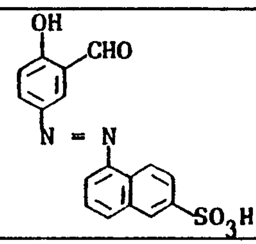 | do | braun |

| No. | I | II | III | IV |
|---|---|---|---|---|
| 67 | 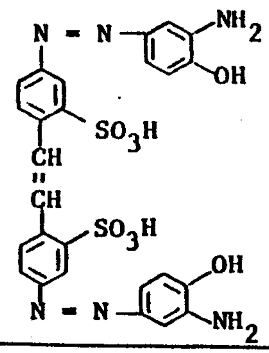 | 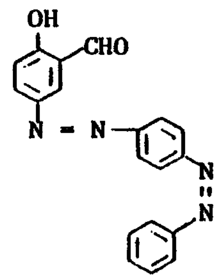 | 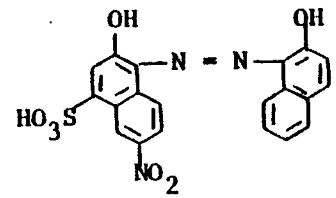 | braun |
| 68 | 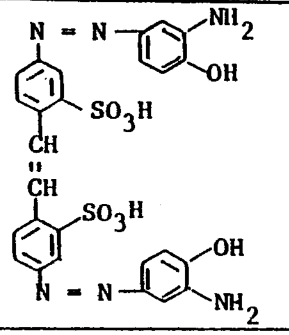 | 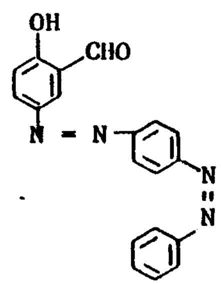 | 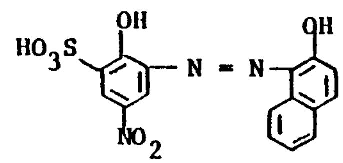 | braun |
| 69 | do | 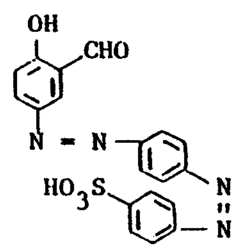 | 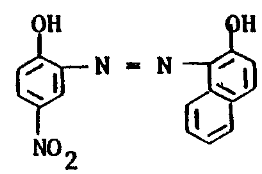 | braun |

| No. | I | II | III | IV |
|---|---|---|---|---|
| 70 | 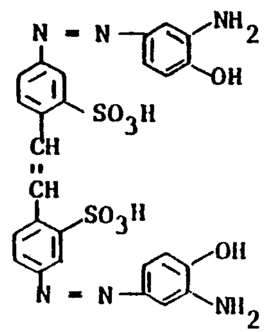 | 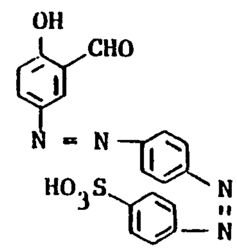 | 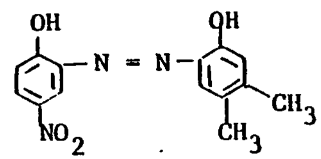 | braun |
| 71 | 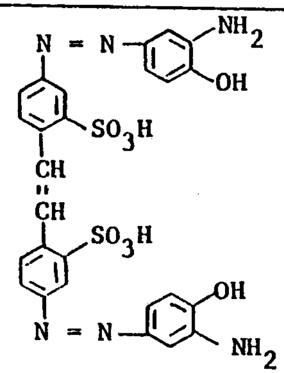 | 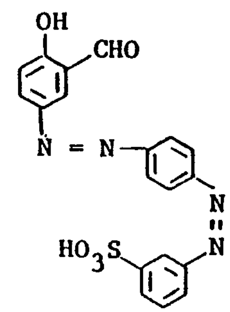 | 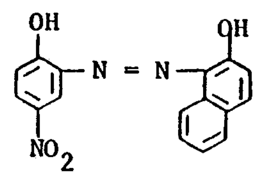 | braun |

| No. | I | II | III | VI |
|---|---|---|---|---|
| 72 | 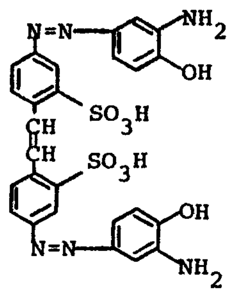 | 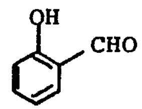 | 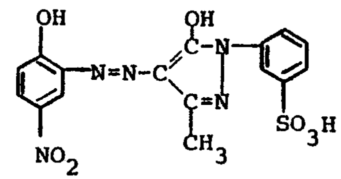 | Rotstichig-Orange |
| 73 | do. | do. | 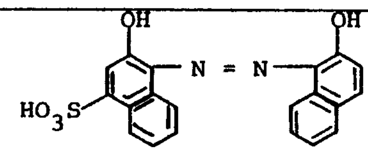 | Braun |
| 74 | do. | do. | 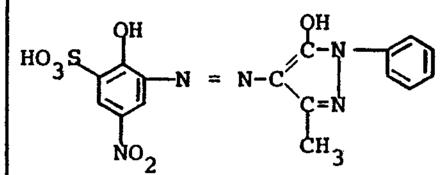 | Rotstichig-Orange |
| 75 | do. | do. | 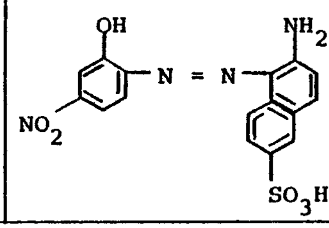 | Braun |

| No. | I | II | III | VI |
|---|---|---|---|---|
| 76 | 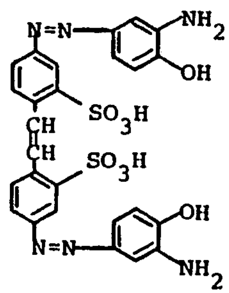 | 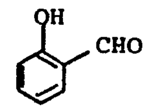 | 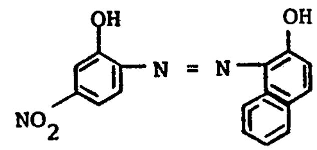 | Dunkelbraun |
| 77 | do. | 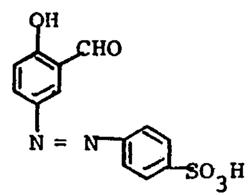 | 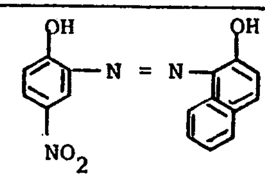 | Braun |
| 78 | 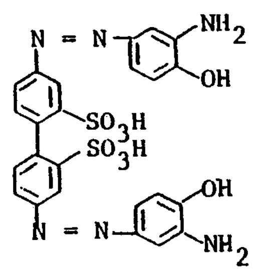 | 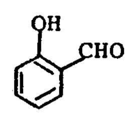 | 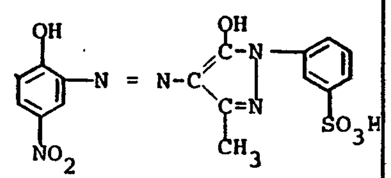 | Orange |

| No. | I | II | III | VI |
|---|---|---|---|---|
| 79 | 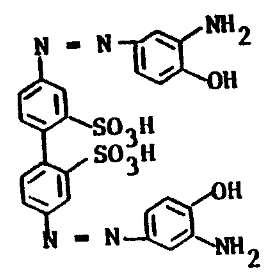 | 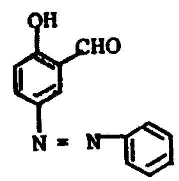 | 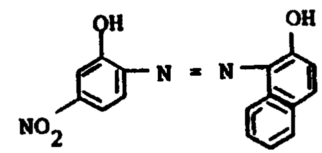 | Olivebraun |
| 80 | do. | do. | 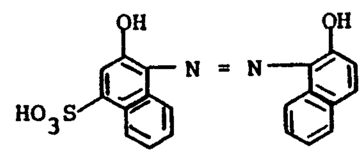 | Olivst. Braun |
| 81 | do. | do. | 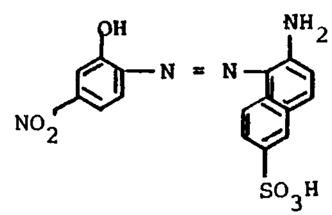 | Braunst. Olive |

Beispiel 4

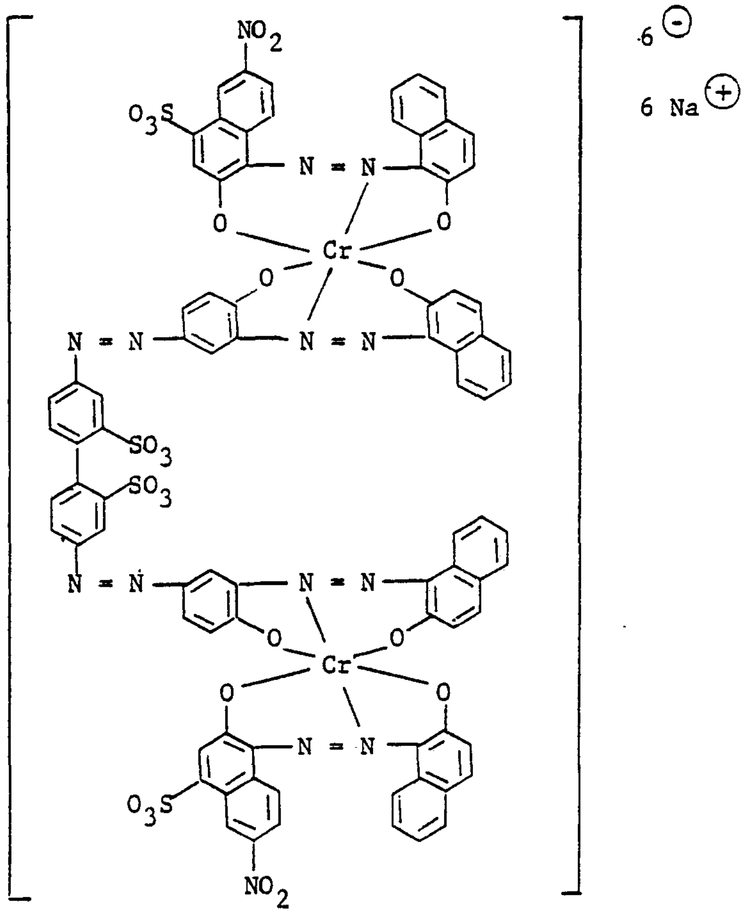

In 750 Volumteilen Aethylenglykol suspendiert man 48,9 Teile der komplexen Chromverbindung vom Typus 1 Chrom : 1 Molekül Farbstoff, welche 5,2 Teile Chrom und 43,9 Teile Monoazofarbstoff aus diazotierter 6-Nitro-1-amino-2-hydroxynaphthalin-4-sulfonsäure und 2-Hydroxynaphthalin entspricht, mit 44,7 Teilen des Tetrazofarbstoffs, welcher erhalten wird durch alkalische Kupplung von tetrazotierter 4,4'-Diaminodiphenyl-2,2'-disulfonsäure auf 2-Acetylamino-1-hydroxybenzol, und anschliessende alkalische Verseifung der Acetylaminogruppen zu Aminogruppen, Rediazotierung derselben und Kupplung auf 2-Hydroxynaphthalin. Man erhitzt das Gemisch auf 80 bis 85° und erhöht gleichzeitig den pH-Wert der Suspension auf 7,5 bis 8 durch Zugabe von 5n Natronlauge und hält es solange bei dieser Temperatur und konstantem pH-Wert durch weitere Zugabe von 5n Natronlauge, bis die Ausgangsprodukte verschwunden sind.

Der neue chromhaltige Farbstoff wird durch Zugabe gesättigter Natriumchloridlösung ausgefällt, abfiltriert und getrocknet. Er stellt ein dunkles Pulver dar, das sich in Wasser löst und Leder in braunschwarzen Tönen von guten Echtheiten färbt.

Beispiel 5

(Siehe die Formel, Seite 38)

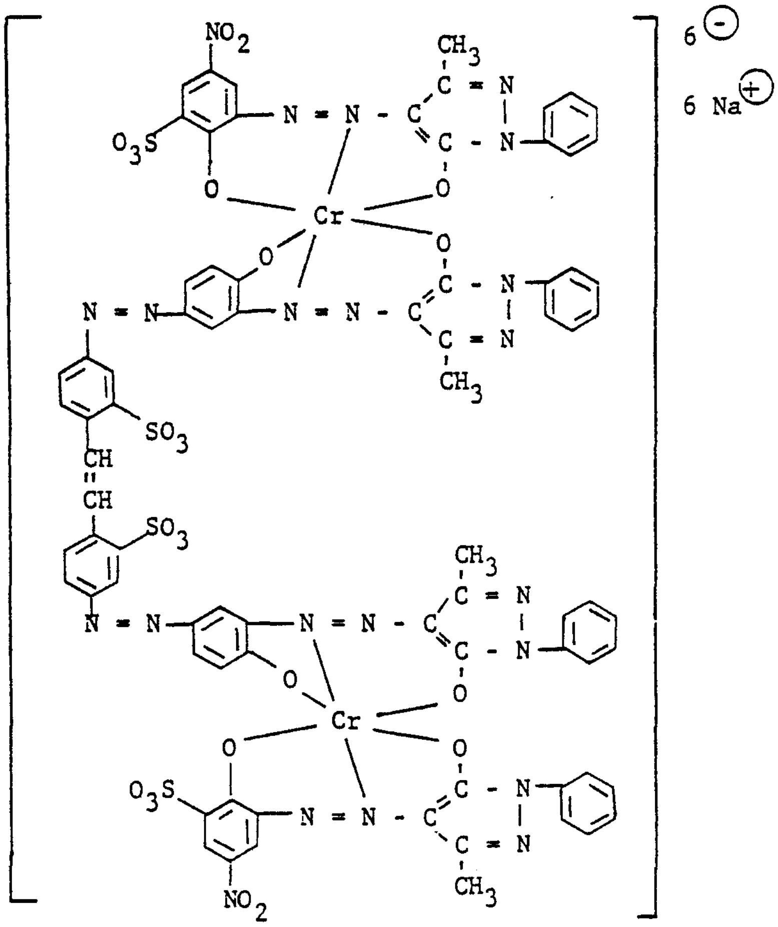

41,9 Teile des Monoazofarbstoffes aus diazotierter 4-Nitro-2-amino-1-hydroxybenzol-6-sulfonsäure und 1-Phenyl-3-methyl-5-pyrazolon werden mit 26,7 Teilen Chromchloridhexahydrat in 750 Volumteilen Aethylenglykol solange bei 120 bis 125° gerührt, bis die Ausgangsverbindung verschwunden ist. Die erhaltene Lösung des Chromkomplexes vom Typus 1 Atom Chrom : 1 Molekül Farbstoff wird hierauf bei 80 bis 85° mit 49 Teilen des Tetrazofarbstoffs, welcher erhalten wird durch alkalische Kupplung von tetrazotierter 4,4'-Diaminostilben-2,2'-disulfonsäure auf 2-Acetylamino-1-hydroxybenzol und anschliessende alkalische Verseifung der Acetylaminogruppen zu Aminogruppen, Rediazotierung derselben und Kupplung auf 1-Phenyl-3-methyl-5-pyrazolon versetzt und solange bei dieser Temperatur gehalten, bis die Anlagerungsreaktion beendet ist. Der pH-Wert des Reaktionsgemisches wird durch Zugabe von 5n Natronlauge auf einen pH-Wert von 7 bis 7,5 gestellt und gehalten.

Hierauf wird der neue, chromhaltige Farbstoff durch Zugabe von gesättigter Natriumchloridlösung ausgefällt, abfiltriert und getrocknet.

Er stellt ein dunkles Pulver dar, das sich in Wasser mit rotbrauner Farbe löst und Leder in rotbraunen Tönen von guten Echtheiten färbt.

Beispiel 6

(Siehe die Formel, Seite 39)

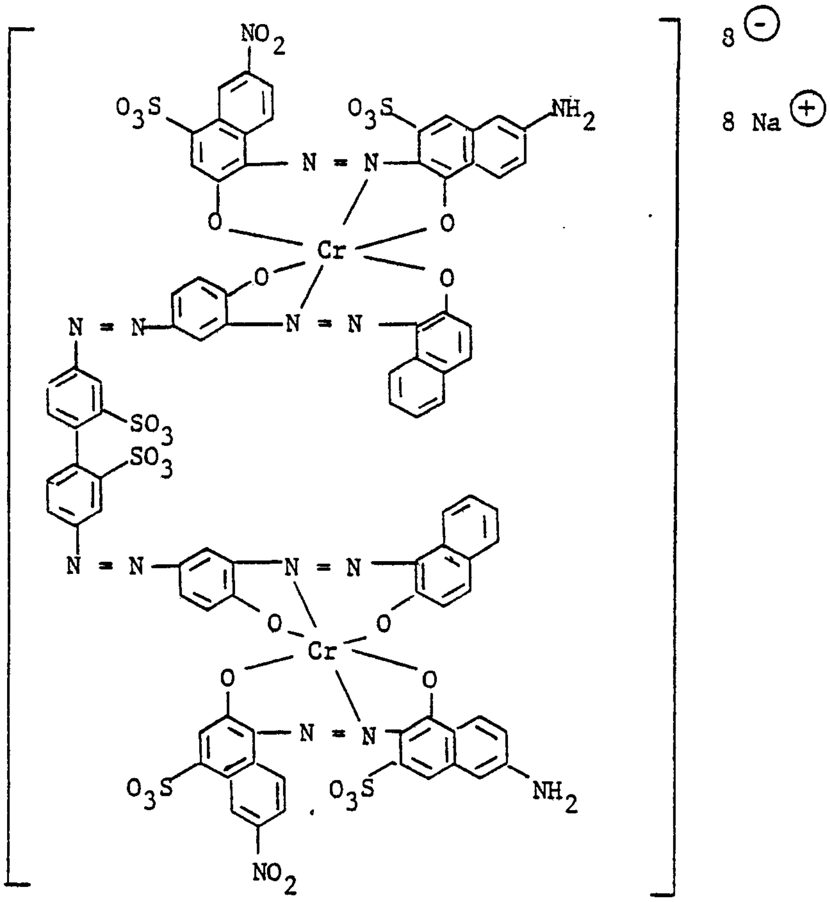

In 750 Volumteilen Wasser suspendiert man 58,4 Teile der komplexen Chromverbindung vom Typus 1 Atom Chrom : 1 Molekül Farbstoff, welche 5,2 Teile Chrom und 53,4 Teile Monoazofarbstoff aus diazotierter 6-Nitro-1-amino-2-hydroxynaphthylin-4-sulfonsäure und 2-Amino-5-hydroxynaphthalin-7-sulfonsäure entspricht mit 44,7 Teilen des Tetrazofarbstoffs, welcher erhalten wird durch alkalische Kupplung von tetrazotierter 4,4'-Diamino-diphenyl-2,2'-disulfonsäure auf 2-Acetylamino-1-hydroxybenzol und anschliessende Verseifung der Acetylaminogruppen zu Aminogruppen, Rediazotierung derselben und Kupplung auf 2-Hydroxynaphthalin. Man erhitzt das Gemisch auf 80 bis 85° und erhöht gleichzeitig den pH-Wert des Reaktionsgemisches auf 7 bis 7,5 durch Zugabe von 5n Natronlauge und hält solange bei dieser Temperatur und konstantem pH-Wert durch weitere Zugabe von 5n Natronlauge, bis die Ausgangsprodukte verschwunden sind. Der erhaltene neue, chromnaltige Farbstoff wird anschliessend durch Zugabe von Natriumchlorid ausgefällt. Man filtriert ihn ab und trocknet ihn. Nach dem Trocknen stellt er ein dunkles Pulver dar, das sich in Wasser mit grauschwarzer Farbe löst und Leder in schwarzen Tönen färbt.

In analoger Weise erhält man weitere erfindungsgemässe Farbstoffe, wenn man den 1 : 1-Chromkomplex der in Kolonne III der folgenden Tabelle angegebenen Azo- oder Azomethinverbindung mit dem Azofarbstoff aus der in Kolonne I angegebenen, tetrazotierten Diaminoverbindung und 2 Aequivalenten der in Kolonne II angegebenen Kupplungskomponente umsetzt. Diese färben Leder in den in Kolonne IV angegebenen Nuancen.

(Siehe die Tabelle, Seiten 40 bis 46)

| No. | I | II | III | IV |
|---|---|---|---|---|
| 1 | 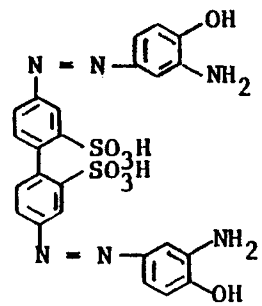 | 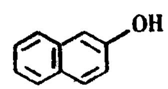 | 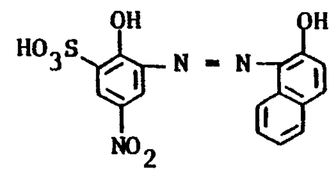 | braunstichig schwarz |
| 2 | do | do | 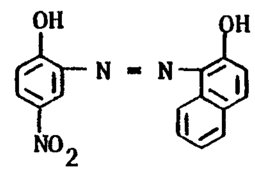 | braunstichig schwarz |
| 3 | do | do | 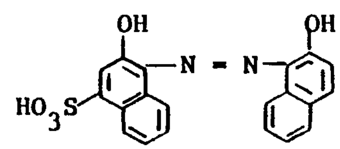 | schwarz |
| 4 | do | do | 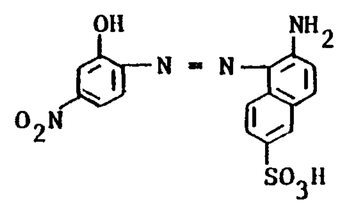 | schwarz |

| No. | I | II | III | IV |
|---|---|---|---|---|
| 5 | 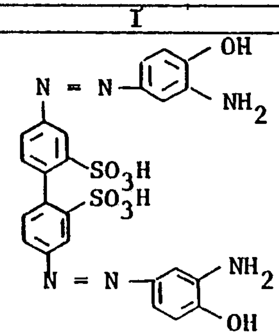 | 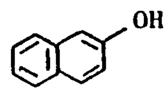 | 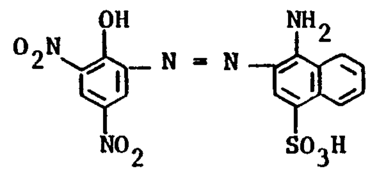 | schwarz |
| 6 | do | do | 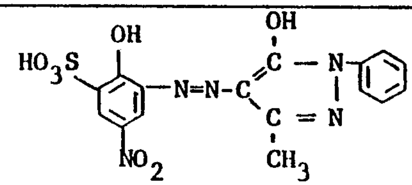 | braun |
| 7 | do | do | 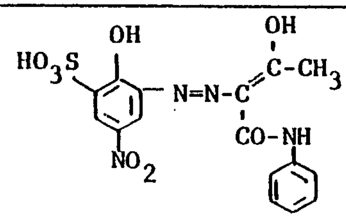 | braun |

| No. | I | II | III | IV |
|---|---|---|---|---|
| 8 | 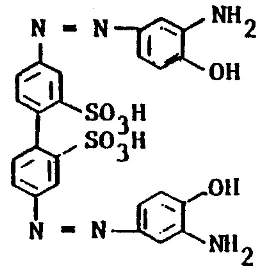 | 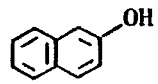 | 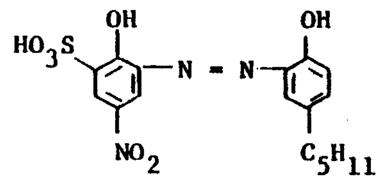 | braun-schwarz |
| 9 | do | do | 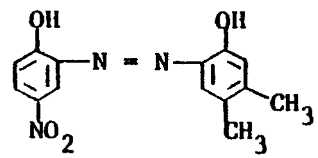 | braun-schwarz |
| 10 | 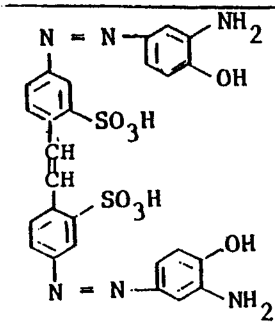 | 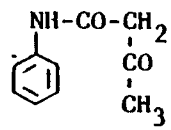 | 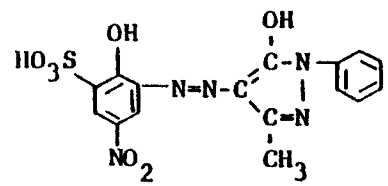 | braun |
| 11 | do | 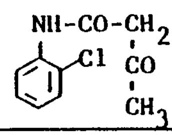 | do | braun |

| No. | I | II | III | IV |
|---|---|---|---|---|
| 12 | 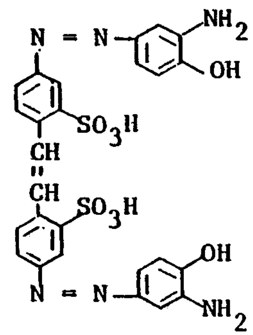 | 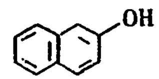 | 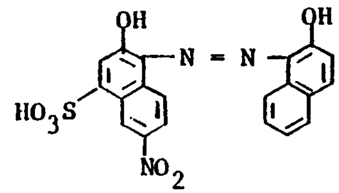 | braun-stichig-schwarz |
| 13 | do | do | 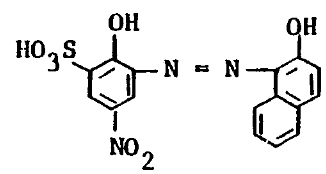 | braun-stichig-schwarz |
| 14 | do | do | 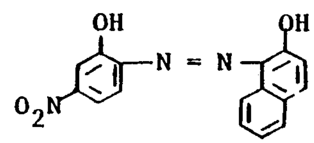 | schwarz |
| 15 | do | do | 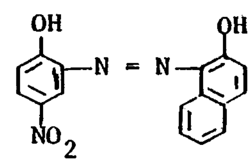 | braun-stichig-schwarz |

| No. | I | II | III | IV |
|---|---|---|---|---|
| 16 | 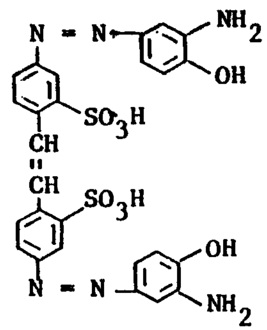 | 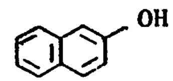 | 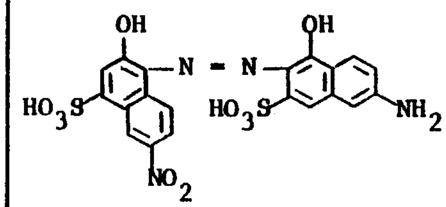 | schwarz |
| 17 | do | do | 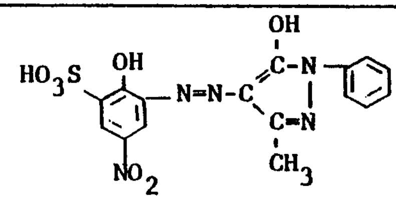 | braun |
| 18 | 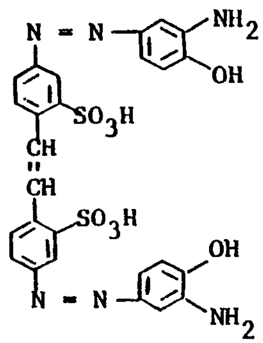 | 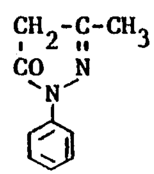 | 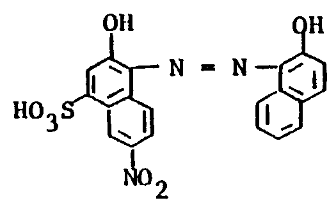 | rotstichig-braun |

| No. | I | II | III | IV |
|---|---|---|---|---|
| 19 | 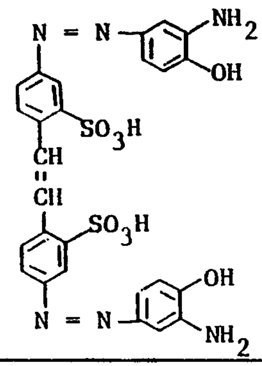 | 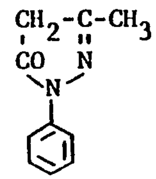 | 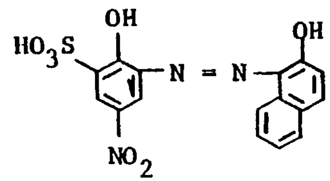 | rotstichig-braun |
| 20 | do | do | 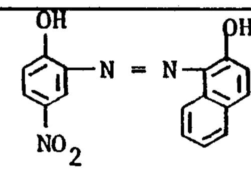 | rotstichig-braun |
| 21 | 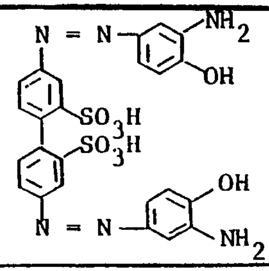 | do | 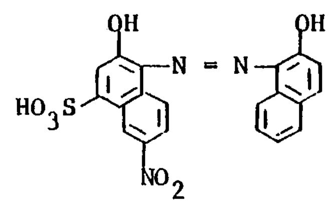 | braun |
| 22 | do | do | 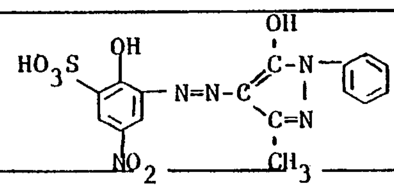 | braun-stichig orange |

| No. | I | II | III | IV |
|---|---|---|---|---|
| 23 | 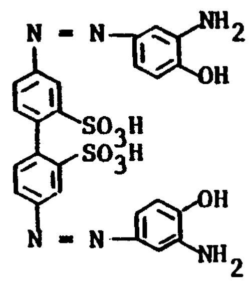 | 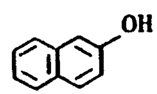 | 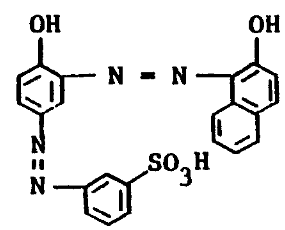 | braunstichig schwarz |

Färbevorschrift für Leder

100 Teile Bekleidungsveloursleder (Trockengewicht) werden bei 50° in einer Lösung von 1 000 Volumteilen Wasser und 2 Teilen Ammoniak 24 %ig während 2 Stunden aufgewalkt und anschliessend bei 60° in einer Lösung von 1000 Volumteilen Wasser, 2 Teilen Ammoniak 24 %ig und 6 Teilen Farbstoff aus Beispiel 1 während 1 Stunde gefärbt. Hierauf gibt man eine Lösung von 40 Volumteilen Wasser und 4 Teilen Ameisensäure 85 %ig zu und färbt noch weitere 30 Minuten. Dann werden die Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen braunen Färbungen zeichnen sich durch gute Echtheiten und gute Deckvermögen aus.

**Ansprüche**

1. Chromkomplexfarbstoffe, die in Form der freien Säure der Formel

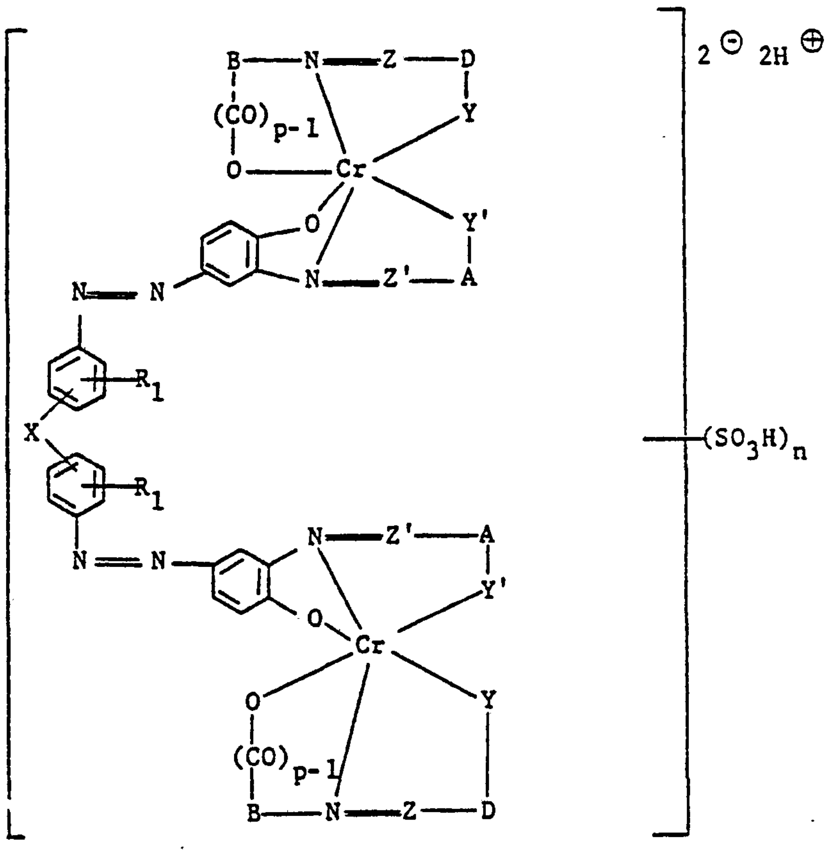

(I)

entsprechen, worin X eine direkte Bindung oder ein Brückenglied, Z und Z' unabhängig voneinander ein Stickstoffatom oder ein CH-gruppe, p unabhängig voneinander 1 oder 2, Y und Y' unabhängig voneinander ein Sauerstoffatom oder eine Gruppe der Formel —NR—, worin R Wasserstoff oder niedrigmolekulares Alkyl bedeutet, wobei, wenn Z bzw. Z' eine CH-Gruppe ist, Y bzw Y' ein Sauerstoffatom sein muss, $R_1$ unabhängig voneinander je Wasserstoff oder einen Substituenten, B unabhängig voneinander einen Benzol- oder Naphthalinrest, A unabhängig voneinander den Rest eines o-Hydroxyaldehyds, wenn Z' die —CH-Gruppe bedeutet, oder, wenn Z' ein Stickstoffatom ist, den Rest einer in o-Stellung zu Y' kuppelnden Kupplungskomponente oder eines Acetessigsäureamids, D unabhängig voneinander den Rest eines o-Hydroxyaldehyds, wenn Z die —CH-Gruppe bedeutet, oder, wenn Z ein Stickstoffatom ist, den Rest einer in o-Stellung zu Y kuppelnden Kupplungskomponente oder eines Acetessigsäureamids und n eine ganze Zahl von 1 bis 10 bedeutet.

2. Chromkomplexfarbstoffe gemäss Anspruch 1 der Formel (1), worin D-Y den Rest eines Phenols, Naphthols, eines Naphthylamins, Pyrazolons, eines Pyrazolimins, eines Pyridons oder eines Acetessigsäureamids bedeutet.

3. Chromkomplexfarbstoffe gemäss Anspruch 1, worin A ein gegebenenfalls mit Arylazo oder Arylazoarylenazo substituierter o-Phenylenrest, Z' die CH-Gruppe und Y' ein Sauerstoffatom ist.

4. Chromkomplexfarbstoffe gemäss Anspruch 1, worin A-Y' den Rest eines Phenols, Naphthols, Pyrazolons, Pyridons oder Acetoacetanilids bedeutet und Z' ein Stickstoffatom ist.

5. Chromkomplexfarbstoffe gemässs Anspruch 1 der Formel (1), worin X die direkte Bindung, eine gegebenenfalls substituierte Methylenbrücke oder das Brückenglied —O—, —S—, —NR'—, —SO—, $—SO_2—$, —CO—, —CO—CO—, $—SO_2—NH—$, $—SO_2—NR'—SO_2—$, —N=N—, $—CH_2—CH_2—$ oder —CH=CH— ist, wobei R' Wasserstoff oder niedrigmolekulares Alkyl bedeutet.

6. Chromkomplexfarbstoffe gemäss den Ansprüchen 1 bis 5, die in Form der freien Säure der Formel

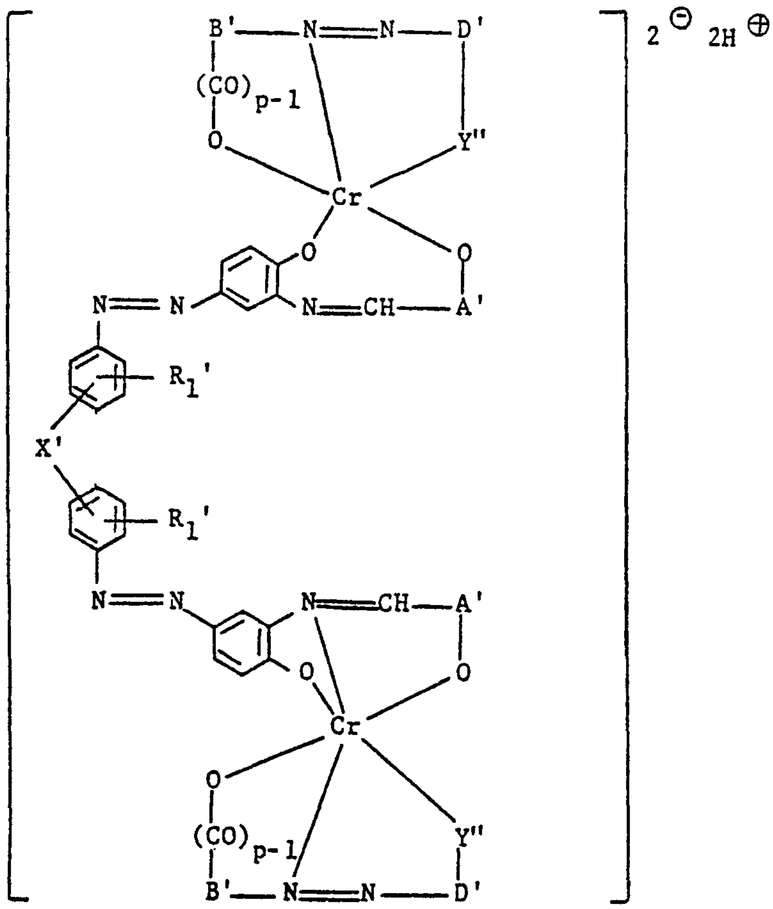

(II)

entsprechen, worin X' eine Brücke der Formel

$-CH_2-$, 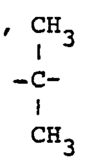 oder $-SO_2-NH-SO_2-$

oder vorzugsweise eine direkte Bindung oder eine Brücke der Formel

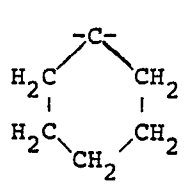 $-CH=CH-$, oder $-SO_2-$,

$R'_1$ unabhängig voneinander je Chlor, Methyl oder Methoxy, oder vorzugsweise Wasserstoff oder die Sulfogruppe, p unabhängig voneinander 1 oder 2, A' unabhängig voneinander ein gegebenenfalls mit Arylazo oder Arylazoarylenazo substituierter o-Phenylenrest, B' unabhängig voneinander ein gegebenenfalls mit Sulfo-, Arylazo-, Arylazoarylenazo-, Alkyl- oder Alkoxygruppen, Chlor, Brom, Nitro oder Cyano substituierter Phenyl- oder Naphthylrest und D'-Y'' unabhängig voneinander der Rest eines gegebenenfalls mit Hydroxy, Alkyl oder Alkoxy substituierten Phenols, der Rest eines gegebenenfalls mit Amino, Sulfo, Chlor oder Acylamino Substituierten Naphthols oder eines gegebenenfalls mit Sulfo substituierten Naphthylamino, den Rest eines 1-Aryl-3-methylpyrazol-5-ons oder der Rest eines im Anilidkern gegebenenfalls mit Sulfo, Nitro, Chlor, Brom, Alkyl oder Alkoxy substituierten Acetessigsäureanilids ist.

7. Chromkomplexfarbstoff gemäss den Ansprüchen 1 bis 5, die in Form der freien Säure der Formel

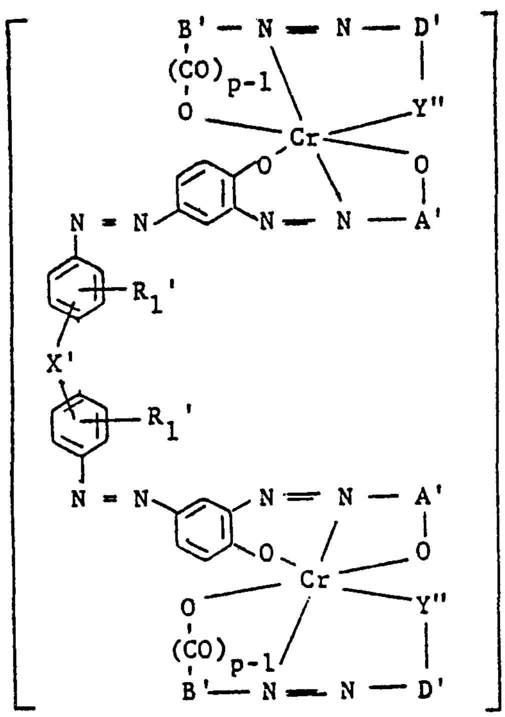

(III)

entsprechen, worin X' eine Brücke der Formel

$-CH_2-$, 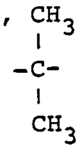 oder $-SO_2-NH-SO_2-$

oder vorzugsweise eine direkte Bindung oder eine Brücke der Formel

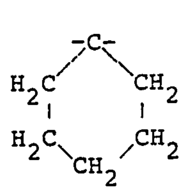 $-CH=CH-$, oder $-SO_2-$,

$R'_1$ unabhängig voneinander je Chlor, Methyl oder Methoxy oder vorzugsweise Wasserstoff oder die Sulfogruppe, p unabhängig voneinander 1 oder 2, A'-O unabhängig voneinander der Rest eines gegebenenfalls mit Sulfo substituierten Naphthols, der Rest eines 1-Aryl-3-methyl-pyrazol-5-ons oder der Rest eines im Anilidkern gegebenenfalls mit Sulfo, Nitro, Chlor, Brom, Alkyl oder Alkoxy substituierten Acetoacetanilids, B' unabhängig voneinander ein gegebenenfalls mit Sulfo-, Arylazo-, Arylazoarylenazo-, Alkyl- oder Alkoxygruppen, Chlor, Brom, Nitro oder Cyano substituierter Phenyl- oder Naphthylrest und D'-Y" unabhängig voneinander der Rest eines gegebenenfalls mit Hydroxy, Alkyl oder Alkoxy substituierten Phenols, der Rest eines gegebenenfalls mit Amino, Sulfo, Chlor oder Acylamino substituierten Naphthols oder eines gegebenenfalls mit Sulfo substituierten Naphthylamins, der Rest eines 1-Aryl-3-methylpyrazol-5-ons oder der Rest eines im Anilidkern gegebenenfalls mit Sulfo, Nitro, Chlor, Brom, Alkyl oder Alkoxy substituierten Acetessigsäureanilids ist.

8. Chromkomplexfarbstoffe gemäss den Ansprüchen 6 und 7, worin die Reste B' mit Nitro oder Sulfo oder Nitro und Sulfo substituiertes Phenyl oder Naphthyl bedeuten.

9. Chromkomplexfarbstoffe gemäss den Ansprüchen 6 und 7 worin die Reste D'-Y" gegebenenfalls mit Sulfo oder Amino und Sulfo substituierte Naphtholreste, gegebenenfalls mit niedrigmolekularem Alkyl substituierte Phenolreste, Acetoacetanilid- oder -chloranilidreste oder 1-Phenyl-3-methyl-pyrazol-5-onreste bedeuten, die im Phenylkern gegebenenfalls noch mit Sulfo oder Chlor oder Sulfo und Chlor substituiert sind.

10. Chromkomplexfarbstoffe gemäss Anspruch 7, worin die Reste A'-O Naphtholreste, Acetoacetanilid- oder -chloranilidreste oder 1-Phenyl-3-methyl-pyrazol-5-onreste bedeuten, die im Phenylkern gegebenenfalls noch mit Sulfo oder Chlor oder Sulfo und Chlor substituiert sind.

11. Chromkomplexfarbstoffe gemäss den Ansprüchen 1 bis 10, welche 2 bis 8, vorzugsweise 2 bis 6 Sulfogruppen enthalten.

12. Verfahren zur Herstellung von Chromkomplexfarbstoffen gemäss Anspruch 1, dadurch gekennzeichnet, dass man einen Farbstoff der Formel

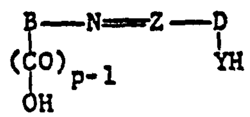

(IV)

oder

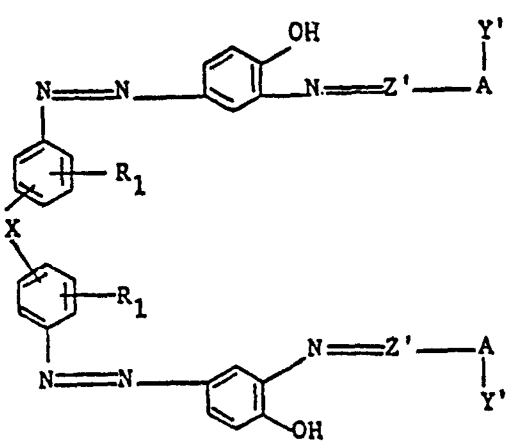

(V)

worin $R_1$, X, Y, Y', Z, Z', A, B, D und p dasselbe wie in Formel (1) bedeuten, mit einem chromabgebenden Mittel zum 1 : 1-Chromkomplex bzw. im Falle der Formel (5) zum 2 Atome Chrom pro Molekül enthaltenden Chromkomplex umsetzt und diesen anschliessend mit dem nicht metallisierten Farbstoff der Formel (5) oder (4) umsetzt, wobei man die Ausgangsverbindungen so wählt, dass der Chromkomplex 1 bis 10 Sulfogruppen enthält, und wobei zu beachten ist, dass das molare Verhältnis der Verbindung der Formel (4) zu derjenigen der Formel (5) 2 : 1 beträgt.

13. Verwendung der gemäss den Ansprüchen 1-11 definierten Farbstoffe zum Färben und Bedrucken von Leder.

**Claims**

1. A chromium complex dye which, in the form of the free acid, has the formula

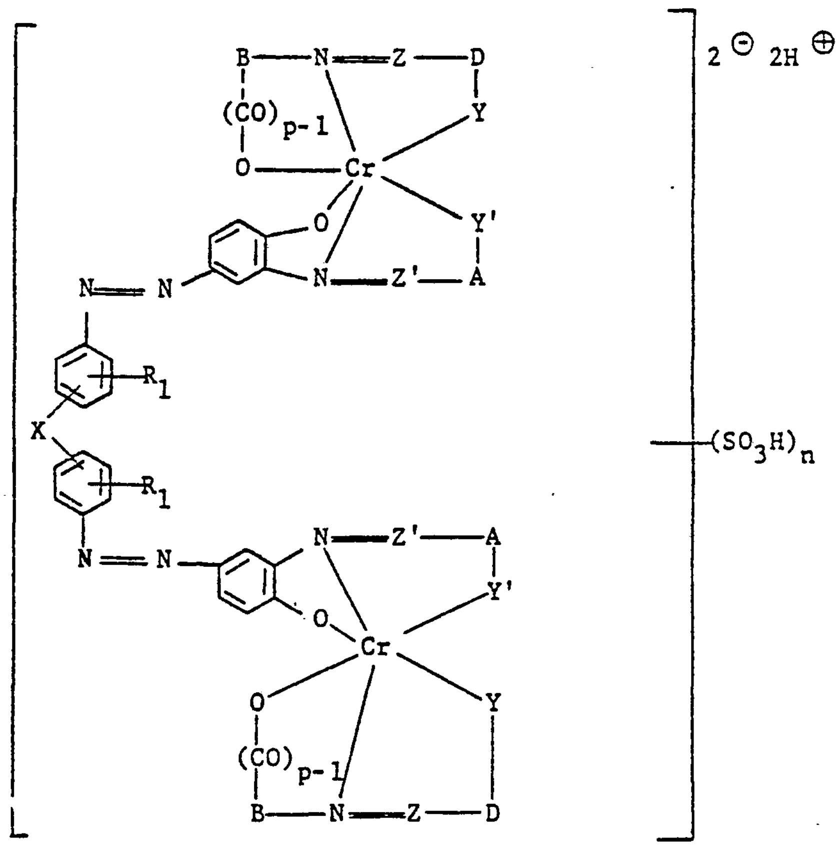

(I)

wherein X is a direct bond or a bridge member, each of Z and Z' independently is a nitrogen atom or a —CH-group, p is 1 or 2, each of Y and Y' independently is an oxygen atom or a group of the formula —NR—, wherein R is hydrogen or low molecular alkyl, with the proviso that if Z or Z' is a —CH-group, Y or Y' must be an oxygen atom, $R_1$ is hydrogen or a substituent, B is a benzene or naphthalene radical, A is the radical of an o-hydroxyaldehyde if Z' is the —CH-group or, if Z' is a nitrogen atom, A is the radical of a coupling component which couples in the ortho-position to Y' or of an acetoacetamide, D is the radical of an o-hydroxyaldehyde if Z is the —CH-group or, if Z is a nitrogen atom, D is the radical of a coupling component which couples in the orthoposition to Y or of an acetoacetamide, and n is an integer from 1 to 10.

2. A chromium complex dye according to claim 1 of the formula (1), wherein D-Y is the radical of a phenol, naphthol, naphthylamine, pyrazolone, pyrazolimine, pyridone or acetoacetamide.

3. A chromium complex dye according to claim 1, wherein A is an o-phenylene radical which is unsubstituted or substituted by arylazo or arylazoaryleneazo, Z' is the —CH-group and Y' is an oxygen atom.

4. A chromium complex dye according to claim 1, wherein A-Y' is the radical of a phenol, naphthol, pyrazolone, pyridone or acetoacetanilide, and Z' is a nitrogen atom.

5. A chromium complex dye according to claim 1 of the formula (1), wherein X is the direct bond, an unsubstituted or a substituted methylene bridge or the bridge member —O—, —S—, —NR'—, —SO—, $—SO_2—$, —CO—, —CO—CO, $—SO_2NH—$, $—SO_2—NR'—SO_2—$, —N = N—, $—CH_2—CH_2—$ or —CH = CH—, and R' is hydrogen or low molecular alkyl.

6. A chromium complex dye according to any one of claims 1 to 5 which, in the form of the free acid, has the formula

(See the formula, p. 52)

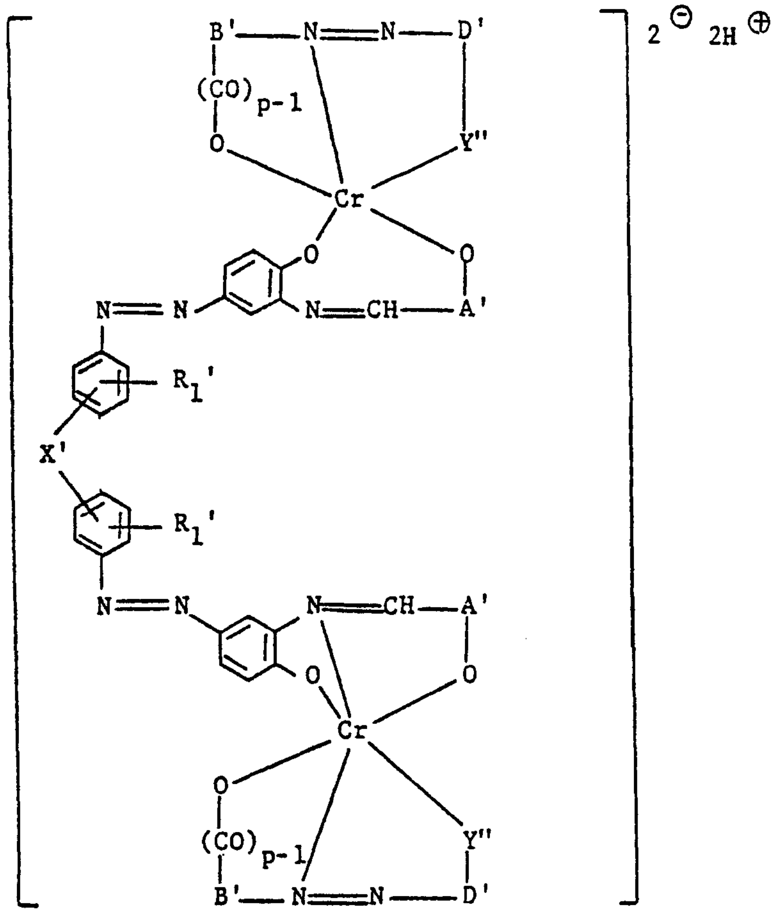

wherein X' is a bridge of the formula

$-CH_2-$, 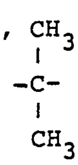 or $-SO_2-NH-SO_2-$

or preferably a direct bond or a bridge of the formula

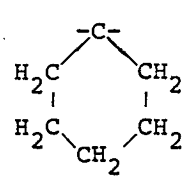 $-CH=CH-$, or $-SO_2-$,

$R'_1$ is chlorine, methyl or methoxy, or preferably hydrogen or the sulfo group, p is 1 or 2, A' is an o-phenylene radical which is unsubstituted or substituted by arylazo or arylazoaryleneazo, B' is a phenyl or naphthyl radical which is unsubstituted or substituted by sulfo, arylazo, arylazo-aryleneazo, alkyl or alkoxy groups, chlorine, bromine, nitro or cyano, and D'-Y" is the radical of a phenol which is unsubstituted or substituted by hydroxyl, alkyl or alkoxy, the radical of a naphthol which is unsubstituted or substituted by amino, sulfo, chlorine or acylamino, or of a naphthylamine which is unsubstituted or

substituted by sulfo, the radical of a 1-aryl-3-methylpyrazol-5-one or the radical of an acetoacetanilide which is unsubstituted or substituted in the anilide nucleus by sulfo, nitro, chlorine, bromine, alkyl or alkoxy.

7. A chromium complex dye according to any one of claims 1 to 5 which, in the form of the free acid, has the formula

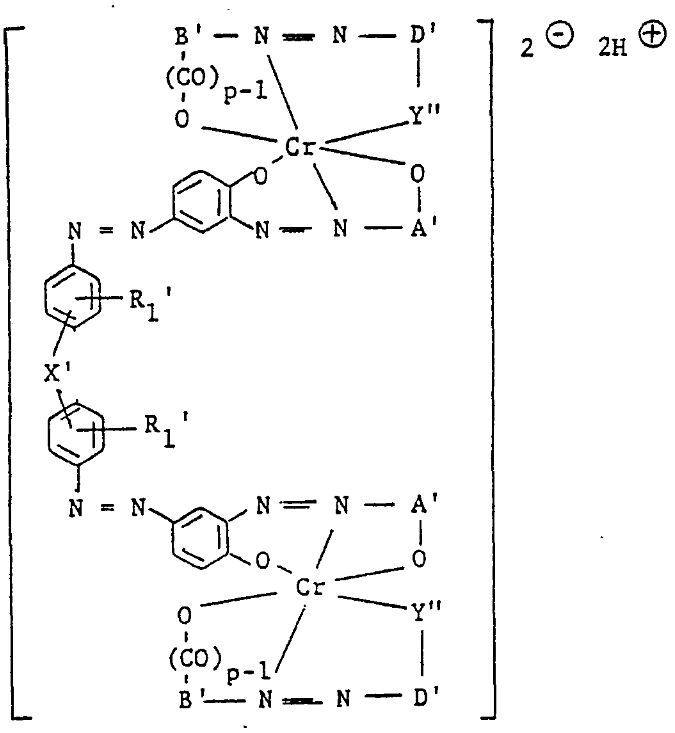

(III)

wherein X′ is a bridge of the formula

$-CH_2-$, 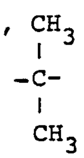 or $-SO_2-NH-SO_2-$

or preferably a direct bond or a bridge of the formula

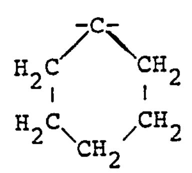 $-CH=CH-$, or $-SO_2-$,

R′$_1$ is chlorine, methyl or methoxy, or preferably hydrogen or the sulfo group, p is 1 or 2, A′-O is the radical of a naphthol which is unsubstituted or substituted by sulfo, the radical of a 1-aryl-3-methylpyrazol-5-one or the radical of an acetoacetanilide which is unsubstituted or substituted in the anilide nucleus by sulfo, nitro, chlorine, bromine, alkyl or alkoxy, B′ is a phenyl or naphthyl radical which is unsubstituted or substituted by sulfo, arylazo, arylazo-aryleneazo, alkyl or alkoxy groups, chlorine, bromine, nitro or cyano, and D′-Y″ is the radical of a phenol which is unsubstituted or substituted by hydroxyl, alkyl or alkoxy, the radical of a naphthol which is unsubstituted or substituted by amino, sulfo, chlorine or acylamino, or of a naphthylamine which is unsubstituted or substituted by sulfo, the radical of a 1-aryl-3-methylpyrazol-5-one or the radical of an acetoacetanilide which can be substituted in the anilide nucleus by sulfo, nitro, chlorine, bromine, alkyl or alkoxy.

8. A chromium complex dye according to either of claims 6 or 7, wherein B′ is phenyl or naphthyl which is substituted by nitro or sulfo or by nitro and sulfo.

9. A chromium complex dye according to either of claims 6 or 7, wherein the radical D′-Y″ is a naphthol radical which is unsubstituted or substituted by sulfo or by amino and sulfo, a phenol radical which is unsubstituted or substituted by low molecular alkyl, the acetoacetanilide or acetochloroanilide radical or a 1-phenyl-3-methylpyrazol-5-one radical which can be additionally substituted in the phenyl nucleus by sulfo or chlorine or by sulfo and chlorine.

10. A chromium complex dye according to claim 7, wherein the radical A′-O is a naphthol radical, the

acetoacetanilide or acetochloroanilide radical or a 1-phenyl-3-methylpyrazol-5-one radical which is additionally substituted in the phenyl nucleus by sulfo or chlorine or by sulfo and chlorine.

11. A chromium complex dye according to any one of claims 1 to 10 which contains 2 to 8, preferably 2 to 6, sulfo groups.

12. A process for the production of a chromium complex dye according to claim 1, which comprises reacting a dye of the formula

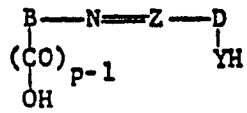

(4)

or

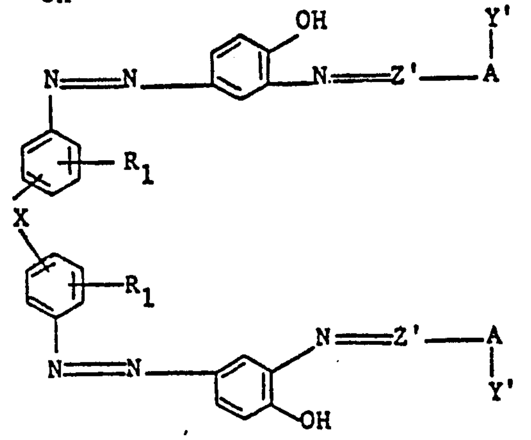

(5)

wherein $R_1$, X, Y, Y', Z, Z', A, B, D and p are as defined for formula (1), with a chromium donor to the 1 : 1 chromium complex or, in the case of a dye of the formula (5), to the 1 : 2 chromium complex, and subsequently reacting said complex with the non-metallised dye of the formula (4) or (5), the starting compounds being chosen such that the chromium complex contain 1 to 10 sulfo groups, and ensuring that the molar ratio of the compound of the formula (4) to that of the formula (5) is 2 : 1.

13. Use of a dye defined according to any one of claims 1 to 11 for dyeing and printing leather.

**Revendications**

1. Colorants à complexes chromifères, qui correspondent, sous forme de l'acide libre, à la formule

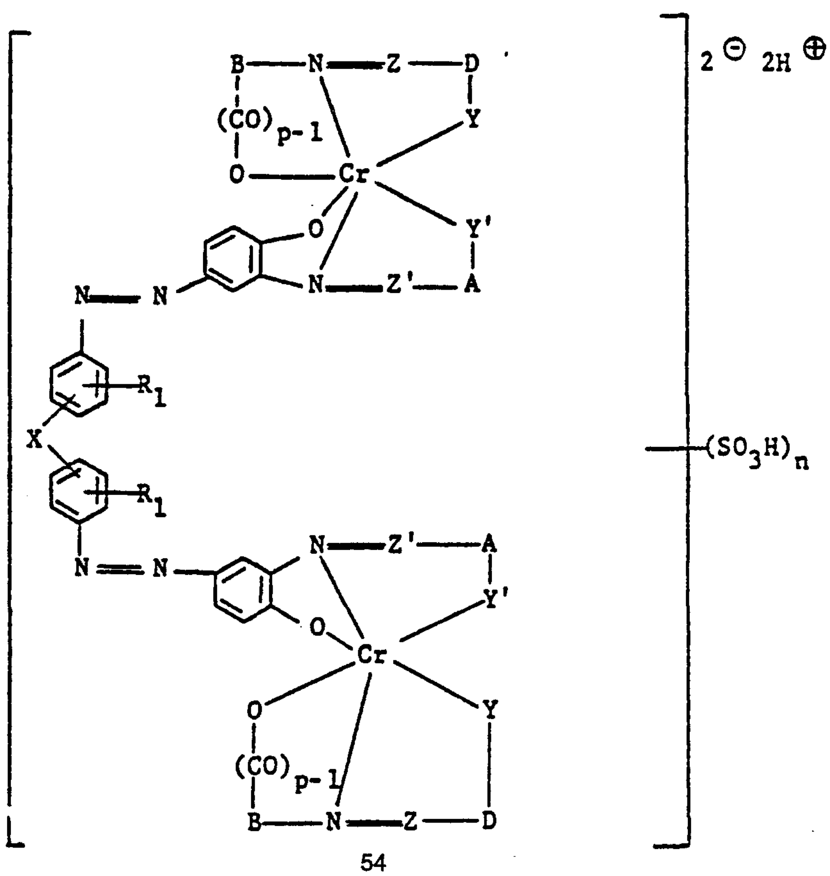

(I)

où X représente une liaison directe ou un chaînon pontal ; Z et Z′ représentent indépendamment l'un de l'autre un atome d'azote ou un groupe —CH ; p représentent indépendamment l'un de l'autre 1 ou 2 ; Y et Y′ représentent indépendamment l'un de l'autre un atome d'oxygène ou un groupe de formule —NR—, où R représente un hydrogène ou un reste alkyle de bas poids moléculaire, où, quand Z ou Z′ est un groupe —CH, Y ou Y′ doit être un atome d'oxygène, $R_1$ représentent indépendamment l'un de l'autre chacun un hydrogène ou un substituant ; B représentent indépendamment l'un de l'autre un reste benzène ou naphtalène ; A représentent indépendamment l'un de l'autre le reste d'un o-hydroxyaldéhyde, quand Z′ représente le groupe —CH, ou bien, quand Z′ est un atome d'azote, le reste d'un composant de copulation se copulant à Y′ en position ortho, ou le reste d'un acétylacétamide ; D représente indépendamment l'un de l'autre le reste d'un o-hydroxyaldéhyde, quand Z représente le groupe —CH, ou bien, quand Z est un atome d'azote, le reste d'un composant de copulation se copulant à Y en position ortho, ou le reste d'un acétylacétamide et n représente un nombre entier de 1 à 10.

2. Colorants à complexes chromifères selon la revendication 1, de formule (1), où D-Y représente le reste d'un phénol, d'un naphtol, d'une naphtylamine, d'une pyrazolone, d'une pyrazolimine, d'une pyridone ou d'un acétylacétamide.

3. Colorants à complexes chromifères selon la revendication 1, où A est un reste o-phénylène éventuellement substitué avec des groupes arylazo ou arylazoarylèneazo ; Z′ est le groupe —CH et Y′ est un atome d'oxygène.

4. Colorants à complexes chromifères selon la revendication 1, où A-Y′ est le reste d'un phénol, d'un naphtol, d'une pyrazolone, d'une pyridone, ou d'un acétoacétanilide, et Z′ est un atome d'azote.

5. Colorants à complexes chromifères selon la revendication 1 de formule (1), où X est la liaison directe, un pont méthylène éventuellement substitué ou le chaînon pontal —O—, —S—, —NR′—, —SO—, —$SO_2$—, —CO—, —CO—CO—, —$SO_2$NH—, —$SO_2$NR′—$SO_2$—, —N = N—, —$CH_2$—$CH_2$—, ou —CH = CH— ; R′ représentant un hydrogène ou un reste alkyle de bas poids moléculaire.

6. Colorants à complexes chromifères selon les revendications 1 à 5, qui, sous forme de leur acide libre, correspondent à la formule

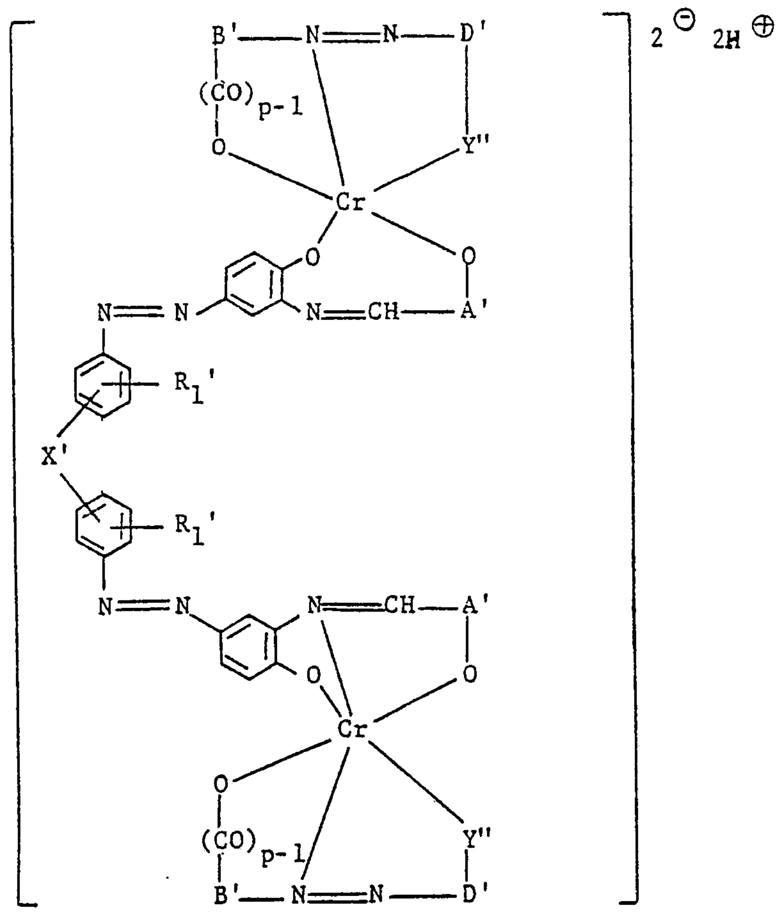

(II)

où X′ est un pont de formule

$-CH_2-$, 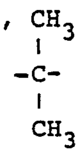 ou $-SO_2-NH-SO_2-$

ou de préférence une liaison directe ou un pont de formule

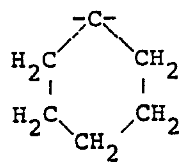 , $-CH=CH-$, ou $-SO_2-$,

$R'_1$ sont indépendamment l'un de l'autre chacun du chlore, un groupe méthyle ou méthoxy, ou de préférence un hydrogène ou le groupe sulfo ; p sont indépendamment l'un de l'autre 1 ou 2 ; A' sont indépendamment l'un de l'autre un reste o-phénylène éventuellement substitué avec des groupes arylazo ou arylazoarylèneazo ; B' sont indépendamment l'un de l'autre un reste phényle ou naphtyle éventuellement substitué avec des groupes sulfo, arylazo, arylazoarylèneazo, alkyle, ou alcoxy, du chlore, du brome, des groupes nitro ou cyano, et D'-Y" sont indépendamment l'un de l'autre le reste d'un phénol éventuellement substitué avec des groupes hydroxyle, alkyle ou alcoxy, le reste d'un naphtol éventuellement substitué avec des groupes amino, sulfo, chlore ou acylamino ou le reste d'une naphtylamine éventuellement substituée par un groupe sulfo, le reste d'une 1-aryl-3-méthylpyrazol-5-one ou le reste d'un acétoacétanilide éventuellement substitué dans le noyau anilide par des groupes sulfo, nitro, du chlore, du brome, des groupes alkyle ou alcoxy.

7. Colorants à complexes chromifères selon les revendications 1 à 5, qui, sous forme de leur acide libre, correspondent à la formule

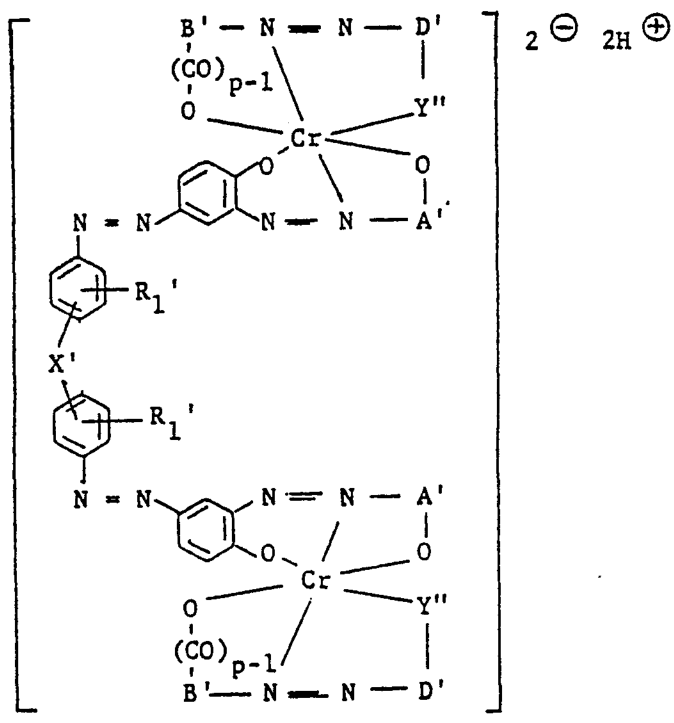

(III)

où X' est un pont de formule

$-CH_2-$, 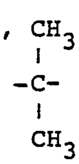 ou $-SO_2-NH-SO_2-$

ou de préférence une liaison directe ou un pont de formule

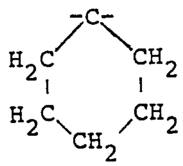 $-CH=CH-$, ou $-SO_2-$,

$R'_1$ sont indépendamment l'un de l'autre chacun du chlore, un groupe méthyle ou méthoxy ou, de préférence, l'hydrogène ou le groupe sulfo ; p sont indépendamment l'un de l'autre 1 ou 2 ; A'-O sont indépendamment l'un de l'autre le reste d'un naphtol éventuellement substitué avec un groupe sulfo, le reste d'une 1-aryl-3-méthyl-pyrazol-5-one ou le reste d'un acétoacétanilide éventuellement substitué dans le noyau anilide avec des groupes sulfo, nitro, du chlore, du brome, des groupes alkyle ou alcoxy ; B' sont indépendamment l'un de l'autre un reste phényle ou naphtyle éventuellement substitué avec des groupes sulfo, arylazo, arylazoarylèneazo, alkyle ou alcoxy, du chlore, du brome, des groupes nitro ou cyano, et D'-Y" sont indépendamment l'un de l'autre le reste d'un phénol éventuellement substitué par des groupes hydroxyle, alkyle ou alcoxy, le reste d'un naphtol éventuellement substitué avec des groupes amino, sulfo, du chlore ou un groupe acylamino ou le reste d'une naphtylamine éventuellement substituée avec des groupes sulfo, le reste d'une 1-aryl-3-méthylpyrazol-5-one ou le reste d'un acétoacétanilide éventuellement substitué dans le noyau anilide par des groupes sulfo, nitro, du chlore, du brome, des groupes alkyle ou alcoxy.

8. Colorants à complexes chromifères selon les revendications 6 et 7, où les restes B' représentent un reste phényle ou naphtyle substitué par des groupes nitro ou sulfo, ou nitro et sulfo.

9. Colorants à complexes chromifères selon les revendications 6 et 7, où les restes D'-Y" représentent des restes de naphtol éventuellement substitués par des groupes sulfo, ou amino et sulfo, des restes de phénol éventuellement substitués avec des groupes alkyle de bas poids moléculaire, des restes d'acétoacétanilide ou -chloranilide ou des restes de 1-phényl-3-méthyl-pyrazol-5-one, qui sont éventuellement substitués dans le noyau phényle avec des groupes sulfo ou chloro, ou sulfo et chloro.

10. Colorants à complexes chromifères selon la revendication 7, où les restes A'-O représentent des restes de naphtol, des restes d'acétoacétanilide ou -chloranilide ou des restes de 1-phényl-3-méthyl-pyrazol-5-one, qui sont éventuellement substitués sur le noyau phényle avec des groupes sulfo, ou chloro, ou sulfo et chloro.

11. Colorants à complexes chromifères selon les revendications 1 à 10, qui contiennent 2 à 8, de préférence 2 à 6, groupes sulfo.

12. Procédé pour la préparation des colorants à complexes chromifères selon la revendication 1, caractérisé par le fait que l'on fait réagir un colorant de formule

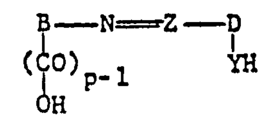 (IV)

ou

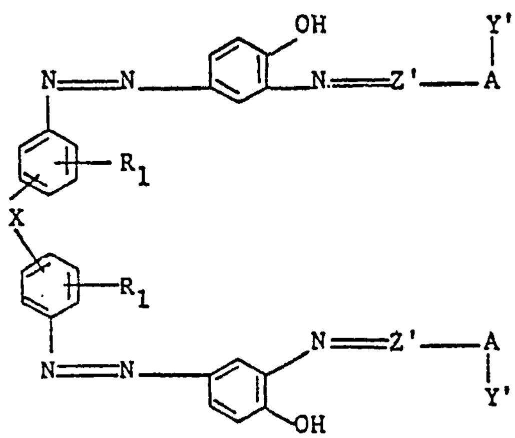 (V)

où R, X, Y, Y', Z, Z', A, B, D et p ont la même signification que dans la formule 1, avec un agent cédant du chrome pour donner le complexe 1 : 1 de chrome, ou bien dans le cas de la formule (5), pour donner le complexe de chrome contenant 2 atomes de chrome par molécule, et que l'on fait ensuite réagir celui-ci avec le colorant non métallé de formule (5) ou (4), en choisissant les composés de départ de telle sorte que le complexe de chrome contienne 1 à 10 groupes sulfo, et en veillant à observer que le rapport molaire du composé de formule (4) à celui de formule (5) s'élève à 2 : 1.

13. Utilisation des colorants définis selon les revendications 1 à 11 pour teindre et imprimer le cuir.